## Europäisches Patentamt

## European Patent Office

## Office européen des brevets

(19)

(11) Veröffentlichungsnummer: **0 153 299**
**B1**

(12) ## EUROPÄISCHE PATENTSCHRIFT

(45) Veröffentlichungstag der Patentschrift:
**20.04.88**

(51) Int. Cl.⁴: **C 02 F 3/28**

(21) Anmeldenummer: **85890034.3**

(22) Anmeldetag: **12.02.85**

(54) Verfahren und Vorrichtung zur anaeroben Behandlung von organischen Substraten.

(30) Priorität: **14.02.84 AT 461/84**

(43) Veröffentlichungstag der Anmeldung:
**28.08.85 Patentblatt 85/35**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**DE - A - 3 302 436**
**DE - C - 806 655**
**FR - A - 553 336**
**FR - A - 2 162 214**
**GB - A - 111 401**
**GB - A - 912 433**
**GB - A - 1 491 502**
**GB - A - 2 021 550**
**GB - A - 2 059 938**

(73) · Patentinhaber: **Nöbl, Ernst Dipl.Ing., Reifgasse 4/10,
A-3500 Krems a.d.Donau (AT)**

(72) Erfinder: **Nöbl, Ernst, Dipl.-Ing., Reifgasse 4/10,
A-3500 Krems a.d. Donau (AT)**
Erfinder: **Nöbl, Astrid Mag., Reifgasse 4/10,
A-3500 Krems a.d. Donau (AT)**

ACTORUM AG

# Beschreibung

Die Erfindung betrifft ein Verfahren zur anaeroben Behandlung von organischen Substraten, die in fester und gelöster Form vorliegen können, wobei die Reaktionsprodukte (z.B. $CH_4$, $CO_2$, Biomasse) gesammelt und dann ausgetragen werden. Weiters ist Gegenstand der Erfindung eine Einrichtung zur Ausübung eines solchen Verfahrens.

Einrichtungen zur anaeroben Behandlung organischer Substrate gehören zum Stand der Technik. Dabei können grundsätzlich zwei verschiedene Ziele angestrebt werden, nämlich die Gewinnung von Energie – in Form von Methangas – aus organischen Substraten oder die Entfernung organischer Stoffe im Sinne einer Reinigung des zugeführten Substrates. Obwohl die chemisch-biologischen Reaktionen ähnlich sind, werden nicht zuletzt durch die wirtschaftliche Betrachtungsweise, an den Zulauf bzw. Ablauf verschiedene Anforderungen gestellt, was sich wiederum im Bau und Betrieb einer Anlage auswirkt. Ein wesentliches Merkmal bei der anaeroben Reinigung von Abwasser ist die Tatsache, dass der grösste Teil der gelösten organischen Verunreinigung nicht wie bei der aeroben Abwasserreinigung fast nur durch den Aufbau neuen Zellmaterials entfernt wird, sondern nur ein geringer Teil zum Aufbau neuen Zellmaterials verwendet wird, während die restlichen Kohlenstoffverbindungen in energiereiches Gas – dem Methangas – und Kohlendioxid umgewandelt werden. Es ist also beim anaeroben Prozess keine Energie zur Sauerstoffeintragung notwendig, wie sie beim aeroben Prozess zur Aufrechterhaltung des Prozessablaufes erforderlich ist. Auch ist die anfallende Schlammenge des anaeroben Prozesses wesentlich kleiner und bereits voll stabilisiert. Ein weiterer grosser Vorteil, vor allem für Saisonbetriebe, ist die Tatsache, dass der anaerobe Schlamm während vieler Monate – auch wenn keine Substratzuführung stattfindet – aktiv gehalten werden kann, und bei neuerlichem Substratanfall in kürzester Zeit wieder hochaktiv wird. Die geringe Biomasseproduktion stellt aber auch einen Nachteil dar, der sich vor allem bei der Inbetriebnahme einer Anlage und bei Störungen in der biologischen Aktivität des Schlammes auswirkt. Dies kann jedoch sowohl durch konstruktive Massnahmen als auch durch die Art der Prozesssteuerung zum Teil kompensiert werden.

Wie bereits erwähnt, handelt es sich bei der anaeroben Fermentation zum überwiegenden Teil um Methanfermentation. Nebenprodukte wie z.B. Schwefelwasserstoff und Ammonium etc. werden fast immer – zwar in verschiedener Menge – gebildet, hier aber nicht gesondert betrachtet. Von Bedeutung sind sie nur bei verschiedenen Substraten, wo sie sich durch Anhäufung negativ auf den Prozess auswirken oder als Verschmutzung des Gases bei dessen Nutzung stören. Die Methangärung wird nach dem heutigen Stand der Wissenschaft am besten im Dreistufenmodell von Bryant (1977) dargestellt, wobei in der ersten Stufe, der sogenannten Hydrolysefermentation, Kohlenhydrate, Fette und Eiweiss in flüchtige Fettsäuren und Alkohole zerlegt werden. In der folgenden Stufe kommt es zur wasserstoffbildenden acetogenen Phase sowie zur Essigsäuregärung, wodurch die Methan-Bakterien aktiviert werden. Ein zu hoher Säurespiegel führt jedoch zum Absterben der Bakterien, so dass eine genaue Steuerung der Säurebildung erforderlich ist. In der dritten Stufe stellt die Essigsäurespaltung bzw. die reduktive Methanbildung den Abschluss des Prozesses dar.

Bei der in der Natur vorkommenden Methangärung (in Sümpfen, Mooren, Pansen von Wiederkäuern usw.) laufen diese Prozesse nebeneinander ab. Um diesen Prozess wirtschaftlich nutzen zu können, war es notwendig, die unter natürlichen Bedingungen nur langsam ablaufende Methanfermentation zu beschleunigen. Zur Schaffung günstiger Randbedingungen wurde eine grosse Anzahl verschiedener Anlagen, sogenannte Anaerobreaktoren entwickelt, mit Hilfe derer eine Optimierung des Prozessablaufes angestrebt wurde.

Ursprünglich waren die Einhaltung der günstigsten Temperatur sowie das Heranführen des neuen Substrates an die Bakterien die wichtigsten Parameter. Sehr bald erkannte man aber, dass die Geschwindigkeit des Prozessablaufes nicht beliebig steigerbar ist. Ursprünglich nahm man an, dass ein als «Reinkultur» in den Prozess eingesetzter Organismus, nämlich der «Bacillus methagenis», einen einwandfreien Prozessablauf sichert. Man erkannte sehr bald, dass es für einen einwandfreien Prozessablauf jedoch nicht genügt, die besten Bedingungen für den Bacillus methagenis zu schaffen, sondern dass darüberhinaus weitere Reaktionsvorgänge zu berücksichtigen sind, von welchen die Methanbildung lediglich den «Abschluss» darstellt. Dies führte zur Entdeckung des Zweistufen-Modelles – Säurebildung, Methanbildung. Allerdings laufen die beiden Stufen mit verschiedenen Prozessgeschwindigkeiten ab. Eine Überhandnahme der Säurebildung und die dadurch auftretende pH-Verschiebung wirkt sich negativ auf die Methanbildung aus, das heisst sie bremst, und bei weiterem unkontrolliertem Prozessablauf werden die methanbildenden Bakterien abgetötet. Eine pH-Korrektur durch Zugabe von Laugen konnte den Prozess immer nur kurzzeitig beeinflussen, aber nicht grundlegend ändern. Bei den zweistufigen Anlagen wurde daher der Versuch unternommen, diese zwei Hauptphasen – Säurebildung, Methanbildung – in getrennten Reaktoren ablaufen zu lassen.

Die bekannten Reaktorbauarten können im grossen und ganzen in fünf verschiedene Typen eingeteilt werden, nämlich die klassische Reaktorbauart, Reaktoren zur Durchführung des Kontaktprozesses, das Anaerobfilter, den Schlammbettreaktor und den Plug-Flow = Reaktor.

**Klassische Reaktorbauarten:**

Darunter fallen in unseren Breitengraden die sogenannten Faultürme zur anaeroben Schlammstabilisierung bei kommunalen Anlagen sowie die Kleinbiogasanlagen in China, Indien, Taiwan etc. Das grösste Problem ist die Verhinderung des Entstehens von Schwimmdecken und mächtiger Ansammlungen von Sinkstoffen sowie von Kurzschlussströmungen des neu zugeführten Substrates. Lösungen bot die Änderung der Geometrie der Reaktoren. Aus der einfachen zylindrischen Bauform wurden herstellungsmässig wesentlich komplizertere eiförmige Längsgeometrien gewählt, um in den heiklen Zonen möglichst kleine Flächen zu bekommen. Um die Bildung von Schwimm- und Sinkschichten zu unterbinden, sowie eine optimale Durchmischung des Reaktorinhaltes und somit auch die Einmischung des neu zugeführten Substrates sicherzustellen, können folgende Methoden in den Reaktoren zur Anwendung kommen:

Umwälzen durch Einpressen von Gas über Lanzen in die Gärmasse; Umwälzen durch im Behälter angeordnete Rühr- und Mischeinrichtungen, wie z.B. Schraubenschaufler;

Umwälzung mittels Verdrängersystem und schliesslich Umwälzung mittels ausserhalb des Behälters angeordneter Pumpen.

Reaktoren zur Durchführung des Kontaktprozesses: Diese Reaktoren wurden zur Entfernung von organischen, vorwiegend gelösten Substraten aus Abwasser entwickelt. Sie sind den aeroben Kläranlagen nachempfunden. Der Reaktor besteht aus einem Rührkesselreaktor und einem entweder integrierten oder externen Absetzbehälter, in dem die Trennung des Schlamm-Wasser-Gemisches stattfindet. Während das so gereinigte Wasser über eine Ablaufrinne abgezogen wird, wird der Schlamm zur Erhöhung der aktiven Biomasse in den eigentlichen Reaktionsraum zurückgeführt. Der Trockensubstanzgehalt im Rücklaufschlamm ist meist nur geringfügig höher als im eigentlichen Reaktor, obwohl eine Vakuumentgasung vorgenommen wurde oder das Absetzbecken gekühlt wurde, um eine weitere Gasbildung zu unterbinden, die dem Absetzen der Schlammflocken hinderlich ist. Dadurch bedingt ist im Reaktor auch nur ein geringer aktiver Biomassegehalt je Volumseinheit vorhanden, was wiederum bedeutet, dass sehr grosse Reaktoren erforderlich sind. Ein weiterer Nachteil ist, dass an das zugeführte Substrat bereits hohe Anforderungen gestellt werden müssen, um überhaupt einen einwandfreien Prozessablauf gewährleisten zu können. Sind nämlich z.B. grössere Mengen absetzbarer anorganischer Stoffe im Zulauf, so würde sich zwar der gewünschte Trockensubstanzgehalt im Reaktor einstellen lassen, aber der Anteil an aktiver Biomasse dennoch absinken.

**Anaerobfilter:**

Die Erkenntnis, dass viele biotechnologische Prozesse nur gelingen, wenn den beteiligten Organismen genügend Oberfläche zum Bewuchs geboten wird, führte zur künstlichen Fixierung der Organismen an Trägermaterialien, wozu eine Reihe von Trägermaterialien und Immobilisierungsverfahren entwickelt wurden. Durch Fixieren der Organismen auf Trägermaterialien kann in vielen Fällen der Prozessablauf stabilisiert werden. Die erhöhte Durchsatzleistung ist nur auf den grösseren Anteil von aktiver Biomasse je Volumseinheit zurückzuführen.

Man versuchte nun, die aus der kommunalen aeroben Abwassertechnik – den sogenannten Tropfkörperanlagen – bekannte Erfahrung mit trägerfixierter Bakterienmasse, analog im anaeroben Bereich einzusetzen. Die Tropfkörperanlage bei Kläranlagen ist in der einfachsten Form ein zylindrischer Behälter mit poröser Trägermaterialfüllung, an der sich die Mikroorganismenflora entwickelt. Das zu reinigende, von absetzbaren Stoffen befreite Abwasser wird über dem Füllmaterial mittels speziellen Sprengern verregnet und fliesst von oben nach unten ständig über den Organismenfilm. Von unten nach oben strömt die Luft durch die vorhandenen Zwischenräume und sorgt für die Sauerstoffversorgung. Durch die Umkehrung des Substratflusses, von unten nach oben, werden alle Zwischenräume mit Substrat angefüllt, dadurch wird eine Luftzirkulation unterbunden, und durch den damit verbundenen Wegfall der Sauerstoffversorgung wird aus dem Tropfkörper ein Anaerobfilter. Zur Füllung können poröse Steine, Keramikmaterial oder spezielle Kunststofffüllkörper verwendet werden. Einziges Ziel ist eine möglichst grosse verfügbare Oberfläche je Volumseinheit. Über ein am Reaktorboden angeordnetes Rohrsystem erfolgt die Substratverteilung über den Reaktorquerschnitt. Der Weg des Substrates durch den auf dem Reaktorboden aufliegenden Füllkörper kann kaum mehr beeinflusst werden. Die Gefahr von Nestbildungen ist sehr gross. Durch Rücknahme eines Teilstromes vom Ablauf kann das zugeführte Substrat verdünnt und eine mittlere theoretische Aufwärtsströmung erreicht werden. Dies ist aber nicht beliebig steigerbar, da sonst eine Rührkesselcharakteristik mit «Hindernis» erreicht wird. Im unteren Teil besteht also die Gefahr, dass durch im Abwasser mitgeführte anorganische Substrate die Räume zwischen den Füllkörpern zum Teil verlegt werden und es so zur Ausbildung von «Kaminen», d.h. zu bevorzugten Durchströmungskanälen kommt. Im oberen Teil, besonders bei relativ hohen Anlagen, kann es durch das bei der Methanfermentation entstandene Gas zu hohen Gasströmungsgeschwindigkeiten kommen. Die dadurch entstehende erhebliche Wirbelwirkung ist Ursache für das Abtragen des Organismenfilmes von den Füllkörpern.

**Schlammbettreaktoren:**

Die in bestimmten Fällen beobachtete Aggregationsfähigkeit des Schlammes ist Voraussetzung für diesen Reaktorentyp. In seiner einfachsten Form handelt es sich um einen aufwärts durchströmten Reaktor, in dessen unterem Bereich sich durch die guten Absetzeigenschaften des Schlammes eine Erhöhung der Trockensubstanzkonzentration einstellt, die nach oben allmählich abnimmt. Der bereits stark mineralisierte Schlamm bildet mehr eine körnige Struktur anstatt der sonst üblichen Flockenstruktur aus. Das von unten zugeführte Substrat erzeugt eine Aufwärtsströmung, die der Absetzgeschwindigkeit der «Schlammkörner» entsprechen soll, um einen Gleichgewichtszustand zu erhalten. Der so erhaltene Schlammfilter hat einen hohen Anteil an aktiver Biomasse je Volumseinheit, woraus sich eine grosse Umsatzrate ergibt, wodurch – verglichen mit anderen Systemen – mit einem wesentlich kleineren Reaktorvolumen das Auslangen gefunden werden kann. So beeindruckend die Leistungsfähigkeit dieses Reaktortyps bei optimalen Bedingungen ist, so schwerwiegend sind die Fol-gen von Störungen. Bereits geringfügige Änderungen in der Zusammensetzung des Zulaufes können das Verhalten bzw. die Ausbildung der gewünschten Schlammstruktur verändern. Die Folge ist, dass sich die Absetzeigenschaften ebenfalls ändern, und dadurch das Gleichgewicht der Strömungen verlorengeht. Dieses Gleichgewicht ist auch sehr stark von der entstandenen Gasmenge und der sich daraus ergebenden Gasströmungsgeschwindigkeit abhängig. Ähnlich dem Anaerobfilter stellt die gleichmässige Verteilung über den gesamten Querschnitt ein grosses Problem dar. Um eine zu starke Mineralisierung des Schlammbettes zu verhindern, darf das zugeführte Substrat nur sehr geringe anorganische Bestandteile enthalten. Die Rückführung eines Teilstromes des Ablaufes wird ebenso zur Prozesssteuerung herangezogen.

Plug-Flow-Reaktoren:

Dieser Reaktortyp ist geeignet, vorwiegend Substrate mit ungelösten, also festen Anteilen zu vergären und wird hauptsächlich bei den Massentierhaltungen zur Vergärung von Mist mit der darin enthaltenen Einstreu verwendet und ist auf diese speziellen Probleme besonders abgestimmt. Wie der Name bereits sagt, handelt es sich hier um einen Typ, der keine vollständige Durchmischung des zugeführten Substrates mit dem Reaktorinhalt anstrebt, sondern das zugeführte Substrat pfropfenartig durch den Reaktor hindurchfördert. Dabei handelt es sich meist um einen horizontal durchflossenen Reaktor. Zur Zerstörung der Schwimmdecke und als Auflockerung der im Grundschlamm enthaltenen Sinkstoffe sowie der allmählichen Durchströmung wird ein sich langsam drehendes Rührwerk oder eine Kratzeinrichtung eingesetzt. Bei den neueren Anlagen wird ein leicht schräg liegender Reaktor bevorzugt. Ebenso wird ein Teil des Ablaufes als sogenanntes Impfgut dem Zulauf zugeführt, um durch den höheren Anteil an aktiver Biomasse die Aufenthaltszeit abzukürzen. Eine weitere interessante Variante entsteht, wenn der Reaktor in mehrere Segmente unterteilt wird und eine teilweise, kontinuierliche Einspeisung von Schlamm (insbes. von Rücklaufschlamm) in die Segmente stattfindet.

Während, wie aus der vorstehenden Beschreibung zu entnehmen, verschiedene Bauarten (Anaerobfilter, Schlammbettreaktor) nur für feststofffreie Substrate verwendbar sind, können die anderen auch mit Substraten, die feste organische Bestandteile enthalten, betrieben werden. Die Kombination solcher Anlagen ist ohne weiteres möglich und auch üblich, stellt aber keinen neuen Typ dar.

Aus der britischen Patentschrift GB-A-2021550 (D1) ist bereits ein Verfahren bekannt, bei dem das ankommende Substrat in ein Schlammbett eingeleitet wird, das aus dem Schlammbett aufsteigende Substrat-Schlammgemisch in eine Verteilungskammer geleitet wird, in der durch Schwerkrafteinfluss Schlammteile abgesetzt werden und durch Öffnungen in das Schlammbett zurückgeführt werden. Bei diesem Verfahren wird der rückgeführte Schlamm von oben, das heisst der Schwerkraft folgend, in das Schlammbett des Reaktors zurückgeführt und nicht mit dem frisch ankommenden Substrat vor dem eigentlichen Passieren des Schlammreaktors vermischt.

Aus der deutschen Offenlegungsschrift DE-A-3302436 (D2) sind Einrichtungen bekannt, bei denen der Reaktionsbehälter durch einen Filter in zwei Reaktorzonen unterteilt ist; Rührorgane in der ersten Reaktorzone vorgesehen sind und der Grundschlamm der ersten Reaktorzone abgezogen und zum Teil eventuell in die Zulaufleitung zurückgeleitet werden kann und somit gemeinsam mit dem zu reinigenden Abwasser in den Behälter zurückgeführt und über das dort vorhandene Innenrohr wiederum in die unteren Zonen des Behälters gelangt, während das zu behandelnde Substrat durch ein Filter mit an-schliessender Schlamm- bzw. Schwebstoff-schicht geleitet wird und das in der anschliessenden Trennzone aus dem Gas-Wasser-Schlammgemisch abgetrennte Gemisch aus Schlamm und behandeltem Wasser über eine Ablaufleitung abgeführt wird.

Der Erfindung liegt die Aufgabe zugrunde, den Verfahrensablauf bei einem derartigen Verfahren gemäss D1 oder D2 zu verbessern und Störungen im Verfahrensablauf, wie sie bisher durch anorganische Substanzen im ankommenden Substrat bedingt waren, oder Schädigungen der Biomasse zu vermeiden, was durch die spezielle Vorkonditionierung des neu zugeführten Substrates für die Methanbakterien gewährleistet wird. Erreicht wird dies dadurch, dass das gemäss der Erfindung zu behandelnde Substrat, gegebenenfalls nach zuerst teilweiser Versäuerung, mit Biomasse vermischt und durch ein Schlammbett hindurchgeleitet wird, wobei gegebenenfalls ein Teil des im Substrat sich bildenden Gases aus dem Substrat zur Verminderung von Turbulenzen abgezogen wird, dass das mit dem Schlammbett in Berührung gestandene Substrat in eine Verteilungskammer geleitet wird und zur Trennung der ab-setzfähigen Schlammteile von den aufschwim-menden Schlammteilen, unter Schwerkrafteein-fluss, wobei die aufschwimmenden Schlammteile zurückgehalten und die sich absetzenden Schlammteile verdrängt und gegebenenfalls einer Nachklärung zur Trennung des Schlammes (Biomasse) von Wasser unterzogen werden und das Wasser zum Teil abgeführt und dabei gegebenenfalls Sauerstoff zwecks Beendigung des anaeroben Prozesses zugesetzt wird, wogegen der Schlamm als Biomasse zur Vermischung mit dem neu zugeführten Substrat eingesetzt wird.

Gegenüber dem aus der deutschen Patentschrift bekannten Verfahren wird nicht nur eventuell ein kleiner Teilstrom des Grundschlammes in den Zulauf zurückgeführt und gelangt anschliessend direkt über ein Mittelrohr in den untersten Bereich des Behälters zurück, sondern die Vorkonditionierung des Zulaufes erfolgt schlagartig mit dem aus der Nachklärkammer zurückgeführten und am Behälterboden vorhandenen Grundschlamm innerhalb einer sehr kurzen und intensiven Mischphase ohne mechanische Rührwerke, wodurch gewährleistet wird, dass Schwankungen in der Substratzusammensetzung (z.B. pH-Wert, Konzentration, Temperatur etc.) abgepuffert werden, bevor es zu einer negativen Beeinflussung der aktiven Biomasse kommt und somit eine wesentliche betriebssicherere d.h. störungsfreierer Verfahrensablauf gewährleistet ist.

Bei der erfindungsgemässen Verfahrensführung wird durch die Vermischung des ankommenden Substrates mit Biomasse eine Steigerung der Aktivität des ankommenden Substrates bewirkt. Das Hindurchleiten durch das Schlammbett bewirkt eine Reduzierung der organischen Fracht des Substrates, und die Abtrennung von Schlamm aus dem Substrat und die Wiederzufuhr des Schlammes an den Anfang des Prozesses erlaubt die Wiederverwendung des an Biomasse angereicherten Substrates zur Steigerung der Aktivität des ankommenden Substrates. Solcherart erlaubt die erfindungsgemässe Verfahrensführung eine wesentliche Verbesserung der anaeroben Behandlung von organischen Substraten, wenn verglichen mit bekannten Verfahren.

Es ist also möglich, auch stark sauren Zulauf ohne vorherige Behandlung, wie z.B. Neutralisierung, in den Reaktor zu geben, vorausgesetzt, es handelt sich um organische Säuren. Die vom Innenzylinder abgegrenzte Pufferzone wird auch benötigt, um es zu ermöglichen, dass der bei einem Einmischvorgang aus dem oberen Bereich des Reaktionsraumes in die Nachklärkammer verdrängte Anteil über die Verteilungsflügel in den Verteilungsraum geleitet werden kann.

In weiterer Ausgestaltung der Erfindung ist vorgesehen, dass der restliche Teil des Wassers, enthaltend geringe Mengen an Schlamm, zur Druckbelastung des mit dem neu zugeführten Substrat zu vermischenden Schlammes eingesetzt wird und dieser hierdurch in die Mischzone verdrängt wird, und dass gegebenenfalls nach der Verdrängung des Schlammes, das geringe Mengen an Schlamm enthaltende Wasser, zumindest teilweise wieder in die Nachklärung zurückgeführt wird. Diese Verfahrensführung erlaubt es, das restliche Wasser, ähnlich wie einen Kolben, zur Druckbelastung des mit dem neu zugeführten Substrat zu vermischenden Schlammes zu verwenden, so dass es keiner weiteren Energiezufuhr zur Bewegung des Schlammes in die Mischzone bedarf. Diese Verfahrensführung ermöglicht solcherart eine besonders energiesparende Vorgangsweise.

Weiters ist vorgesehen, dass das sich aus dem Substrat im Zuge der Durchwanderung des Schlammbettes bildende Gas zumindest teilweise in das in der Verteilungskammer befindliche Substrat zur Zerstörung einer etwa vorhandenen Schwimmdecke eingeleitet wird. Hierdurch wird ein Teil der im Verfahren selbst anfallenden Energie zur Zerstörung der Schwimmdecke verwendet, und es bedarf keinerlei Zufuhr zusätzlicher Energien von aussen, um dies zu bewirken.

In besonders zweckmässiger Verfahrensführung kann vorgesehen werden, dass nach dem Vermischen mit Biomasse das Substrat durch ein Bett aus mit Biomasse bewachsenen Füllkörpern hindurchgeleitet wird. Durch das Hindurchleiten von mit Biomasse bereits angereichertem Substrat durch das Bett aus Füllkörpern wird vermieden, dass der Biomassebewuchs der Füllkörper durch das ankommende Substrat eine Schädigung erfährt, d.h. die Aktivität des Bettes der Füllkörper bleibt erhalten. Hierbei ist es besonders zweckmässig, wenn beim Hindurchleiten des Substrates durch das Bett aus Füllkörpern und das Schlammbett, die Füllkörper und der Schlamm entgegen der Schwerkraft angehoben werden und anschliessend, der Schwerkraft folgend, sich absetzend, das Substrat durchwandern. Durch diese Massnahme wird vermieden, dass die Füllkörper des Bettes miteinander verbacken und somit Toträume entstehen und das Schlammbett unter Umständen sogar zuwächst, wodurch ein Hindurchleiten des Substrates ausgeschlossen wird.

Dadurch, dass die Füllkörper beim Hindurchströmen des Substrates angehoben wurden und bei der Absetzbewegung das Substrat durchwandern, wird eine optimale Heranführung des Substrates an die Bakterienmasse ermöglicht.

Die erfindungsgemässe Einrichtung zur Durchführung des Verfahrens weist einen Reaktor auf, in den eine Zufuhrleitung für das Substrat mündet und von dem eine Abfuhrleitung für das behandelte Substrat abgeht. Eine solche Einrichtung ist nun so auszugestalten, dass ein optimaler Prozessablauf innerhalb des Reaktors gewährleistet wird. Zu diesem Zweck ist vorgesehen, dass erfindungsgemäss im Reaktor ein stehender Innenzylinder, insbes. zentrisch, angeordnet ist, dass dieser Innenzylinder eine dichte Zwischendecke durchsetzt, die den Raum zwischen der Behälteraussenwand und dem Innenzylinder abdeckt, wobei der Innenzylinder mit seinem oberen, offenen Rand in den Raum zwischen der Zwischendecke und der Abschlussdecke des Reaktors hineinragt und der Innenraum (Pufferraum) des Innenzylinders bodenseitig mit dem Raum oberhalb der Bodenplatte des Reaktors in Verbindung steht, dass weiters in dem Reaktor ein Abzug angeordnet ist, an dem die Ablaufleitung angeschlossen ist, dass der Raum unterhalb der Zwischendecke mit dem Raum oberhalb der Zwischendecke über mindestens eine, bevorzugt die Zwischendecke durchsetzende Verbindungsleitung verbunden ist, dass in dem Raum oberhalb der Zwischendecke bevorzugt ein Verteilungszylinder angeordnet ist, in den die Verbindungsleitung einmündet. Durch diese Anordnung wird bewirkt, dass aus dem Raum unter der Zwischendecke Substrat über die Verbindungsleitung in den Raum oberhalb der Zwischendecke gelangt und von dort in den Innenzylinder und durch diesen hindurch wieder nach unten gegen den Boden des Reaktors, wodurch eine besonders gute Durchmischung des im Reaktor befindlichen Substrates bewerkstelligt wird.

In weiterer Ausgestaltung der Erfindung ist vorgesehen, dass der bevorzugt als Überlaufrinne ausgebildete Abzug in dem Raum zwischen der Abschlussdecke und der dichten Zwischendecke angeordnet ist, wobei die Mündung der Zulaufleitung unterhalb der Zwischendecke, bevorzugt innerhalb des Innenzylinders, liegt. Die Zuführung des Substrates unterhalb der Zwischendecke wird dabei in jenen Fällen ausgeführt werden, in denen nur eine geringe Vorversäuerung gewünscht wird. Soferne man jedoch einen höheren Versäuerungsgrad für nötig erachtet, wird in weiterer Ausgestaltung der Erfindung vorgesehen, dass der bevorzugt als Überlaufrinne ausgebildete Abzug in dem Raum unterhalb der Zwischendecke angeordnet ist, wobei die Mündung der Zulaufleitung oberhalb der Zwischendecke liegt.

In weiterer Ausgestaltung der Erfindung ist vorgesehen, dass der Pufferraum des Innenzylinders bodenseitig über Einmischvorrichtungen, die bevorzugt von durch Verteilungsflügel begrenzte Kanäle gebildet sind, mit dem Raum oberhalb der Bodenplatte des Reaktors in Verbindung steht und dass gegebenenfalls die bodenseitige Begrenzung der Kanäle von einem Verteilungskegel gebildet ist, der von der Bodenplatte aufragt. Durch diese Massnahme wird bewirkt, dass das im Pufferraum befindliche Gut mittels der Einmischeinrichtung nicht nur in Bodennähe dem ausserhalb des Zylinders befindlichen Gut im Reaktor zugeführt wird, sondern in dieses einwandfrei eingemischt wird. Werden Verteilungsflügel verwendet, so kann beim Einmischvorgang auf das Gut, das aus dem Innenzylinder kommt, ein Drall ausgeübt werden, wodurch eine weitere Verbesserung der Einmischung erzielbar ist.

In besonders zweckmässiger Ausgestaltung der erfindungsgemässen Einrichtung kann vorgesehen werden, dass der obere Rand des Innenzylinders in eine Siphonglocke hineinragt, wobei der Raum unter der Siphonglocke unterhalb des oberen Randes des Innenzylinders mit dem Raum oberhalb der Zwischendecke in Verbindung steht. Durch diese Massnahme wird ein zeitweiliger Abschluss des Innenraumes des Innenzylinders gegen den Raum oberhalb der Zwischendecke bewerkstelligt. Dadurch wird eine Kurzschlussströmung aus dem Innenzylinder gegen den Abfluss, der sich im Raum oberhalb der Zwischendecke befindet, vermieden. Hingegen hindert die Siphonglocke nicht, dass oberhalb der Zwischendecke befindlicher Schlamm beim Einmischvorgang in den Innenzylinder gelangt und durch den Innenzylinder hindurch gegen den Boden des Reaktors gefördert wird.

In besonders zweckmässiger Ausgestaltung der erfindungsgemässen Einrichtung ist eine Steuereinrichtung zur Beeinflussung des Druckes unter der Siphonglocke vorgesehen. Durch entsprechende Drucksteuerung in dem Raum unter der Siphonglocke kann vermieden werden, dass der sich unter der Siphonglocke entwickelnde Druck in den Raum oberhalb der Zwischendecke durchschlägt und dort zu einer Verwirbelung des Substrates führt, was einer Absetzbewegung des Schlammes entgegengesetzt wäre. Die Steuerung zur Beeinflussung des Druckes unter der Siphonglocke kann dadurch bewirkt werden, dass, in besonderer Ausgestaltung der Erfindung, in den Raum zwischen der Seitenwand des Innenzylinders und der Siphonglocke, unterhalb des oberen Randes des Innenzylinders, eine Gasleitung, bevorzugt mit einer an ihrem Ende vorgesehenen Erweiterung, mündet, wobei diese Leitung mit einer Druckquelle in Verbindung steht, die im Mündungsquerschnitt einen dem Maximaldruck unter der Siphonglocke entsprechenden Druck liefert, wobei vorzugsweise die Druckquelle das sich unter der Zwischendecke sammelnde Gas ist und die zweite Mündung der Gasleitung in dem Gasraum liegt.

In weiterer Ausgestaltung der Erfindung ist vorgesehen, dass in die Siphonglocke, bevorzugt im Bereich der höchsten Stelle, eine Gasabfuhrleitung mündet, die bevorzugt mit einem von der Zwischendecke ausgehenden Gasdom in Verbindung steht, dessen Decke höher liegt als das Niveau des Abzuges aus dem Raum oberhalb der Zwischendecke. Die Gasabfuhrleitung ermöglicht es hiebei, dass der Druck unter der Gasglocke abgebaut wird, wodurch dann eine Strömung von Substrat aus dem Raum oberhalb der Zwischendecke in den Innenzylinder ermöglicht wird, so dass der Schlamm von oben in den Innenzylinder gelangt und unten Substrat nach ausserhalb des Innenzylinders verdrängt. Die Gasabfuhrleitung kann dabei auch direkt zu einem Verbraucher führen oder zu einem externen Gasspeicher. Soferne die Gasabfuhrleitung zum Verbraucher führt, ist in diese ein Absperrorgan einzubauen. Ebenso wäre in die Gasabfuhrleitung ein Absperrorgan einzubauen, wenn die Gasabfuhrleitung in den Raum unter der Abschlussdecke des Reaktors geführt wird. Soferne die Gasabfuhrleitung in den Raum unter der Zwischendecke eingeführt wird, bedarf es keines Abschlussorgans in dieser Leitung.

Der im Reaktor an sich selbsttätig ablaufende Prozess kann zusätzlich von aussen beeinflusst werden, wenn in Weiterbildung der Erfindung die Gasabfuhrleitung aus der Siphonglocke über ein Dreiwegventil mit dem Gasdom in Verbindung steht, das an die Druckseite eines Druckerhöhungsgebläses angeschlossen ist, das saugseitig mit dem Gasraum, dem Raum unter der Abschlussdecke des Reaktors und einer Gasabgangsleitung, die vom Reaktor wegführt, verbunden ist, wobei in die zum Gasdom führende Gasabgangsleitung ein Absperrorgan, z.B. eine Absperrklappe, eingesetzt ist.

Das beim Ablauf des Prozesses entstehende Gas kann zur Verhinderung der Bildung einer Schwimmdecke im Verteilungszylinder ausgenutzt werden, wenn in besonderer Ausgestaltung der Erfindung in den, in dem Raum oberhalb der Zwischendecke angeordneten Verteilungszylinder, eine Gasabgangsleitung einmündet, die im Raum unterhalb der Zwischendecke in einem Niveau endet, das tiefer liegt als der obere Rand des Innenzylinders, wobei gegebenenfalls die Mündung vom Ende einer Rohrerweiterung der Gasabgangsleitung gebildet ist. Um die Überdeckung zwischen dem unteren Rand der Siphonglocke und dem oberen Rand des Innenzylinders nicht zu gross ausführen zu müssen, kann in besonderer Ausgestaltung der Erfindung vorgesehen sein, dass die den Raum unter der Zwischendecke mit dem Raum über der Zwischendecke verbindende Verbindungsleitung, zwischen ihren Enden und im Raum oberhalb der Zwischendecke, jedoch unterhalb des Niveaus des Abzuges (Überlaufrinne), mit einer steuerbaren Öffnung versehen ist, wobei zur Steuerung vorzugsweise ein Schwimmkörper vorgesehen ist, mittels welchem ein Abschliessen der Öffnung bei sich änderndem Flüssigkeitsspiegel erfolgt.

Soferne ein kontinuierlicher Abfluss von behandeltem Substrat aus dem Reaktor gewünscht wird, ist in weiterer Ausgestaltung der Erfindung vorgesehen, dass oberhalb der Zwischendecke und unterhalb des Niveaus des Abzuges (Überlaufrinne) ein höhenvariabler Ablauf angeordnet ist, der über eine, bevorzugt mit einem Absperrorgan (Absperrklappe) versehene, Leitung mit der Ablaufleitung in Verbindung steht.

In weiterer Ausgestaltung der Erfindung kann vorgesehen sein, dass die unterhalb der Zwischendecke gelegene Mündung der den Raum unterhalb mit dem Raum oberhalb der Zwischendecke verbindenden Verbindungsleitung durch Gasfallen abgedeckt ist. Durch diese Massnahme wird sichergestellt, dass im Raum oberhalb der Zwischendecke, wo eine Nachklärung stattfindet, nur Substrat und Wasser, nicht jedoch auch Gas, geleitet wird.

Zur Verbesserung des Prozessablaufes ist es zweckmässig, wenn – worauf bereits hingewiesen wurde – von Füllkörpern Gebrauch gemacht wird, die mit Biomasse bewachsen sind.

In Weiterbildung der Erfindung ist daher vorgesehen, dass unterhalb der Zwischendecke mindestens ein, den Raum zwischen der Behälteraussenwand und dem Innenzylinder überspannender, durchlässiger Zwischenboden angeordnet ist, auf welchem ein Bett aus Füllkörpern ablagerbar ist.

Um zu vermeiden, dass in den Abzug Schlammteile gelangen, kann in weiterer Ausgestaltung der erfindungsgemässen Einrichtung vorgesehen werden, dass dem bevorzugt als Überlaufrinne ausgebildeten Abzug (strömungsmässig) ein Filter vorgeschaltet ist.

Um einem Zuwachsen des Filters vorzubeugen, kann vorgesehen werden, dass das Filter den Boden eines Speicherraumes bildet, der in dem Raum oberhalb der Zwischendecke liegt, wobei die Seitenwandungen des Speicherraumes das Überlaufniveau des im Speicherraum angeordneten Abzuges (Überlaufrinne) überragen, so dass das zu filternde Substrat auf seinem Weg zum Abzug das Filter von unten anströmt.

Um sicherzustellen, dass dem Filter zu filterndes Material aus einer bereits schlammarmen Zone zugeführt wird und dadurch die Belastung des Filters weiter vermindert wird, kann vorgesehen werden, dass unterhalb des Filters ein Beschickungsraum angeordnet ist, der durch Begrenzungswände von dem Raum oberhalb der Zwischendecke getrennt ist, jedoch mittels mit Rückschlagsicherungen ausgestatteten Rückspülöffnungen mit dem Raum oberhalb der Zwischendecke verbindbar ist und dass in den Raum unterhalb des Filters Zulaufleitungen münden, die von einem Überlauf ausgehen, dessen Überlaufniveau ungefähr in gleicher Höhe wie das Überlaufniveau des Abflusses in der bodenseitig durch das Filter begrenzten Kammer liegt.

Die Erfindung wird nachstehend anhand der Zeichnung näher erläutert. Es zeigen,

Fig. 1 einen Längsschnitt durch ein erstes Ausführungsbeispiel eines erfindungsgemässen Reaktors, wobei unmittelbar ausserhalb der medianen Schnittebene befindliche Details in dieselbe projiziert wurden,

Fig. 2 eine Draufsicht bei abgehoben gedachter Decke des Reaktors,

Fig. 3 einen Schnitt entlang der Linie III–III in Fig. 1,

Fig. 4 einen Längsschnitt durch ein zweites Ausführungsbeispiel eines erfindungsgemässen Reaktors, und

Fig. 5 eine Draufsicht auf den Reaktor gemäss Fig. 4 bei abgehoben gedachter Decke.

Der Reaktor weist eine zylindrische Behälteraussenwand 1, eine ebene Bodenplatte 2 und eine ebenfalls ebene Abschlussdecke 3 auf.

Das zu behandelnde Substrat gelangt, nachdem es auf die nötige Betriebstemperatur gebracht wurde, über eine Zulaufleitung 12 in eine durch einen Innenzylinder 7 vom übrigen Reaktor abgetrennte Pufferzone 14. Das in dieser Pufferzone 14 befindliche Substrat wird nach unten gegen die Bodenplatte 2 verdrängt und gelangt so in einen Verteilungsraum 15 unter einem Reaktionsraum 19. Verteilungsraum 15 und Reaktionsraum 19 sind voneinander durch eine durchlässige Zwischendecke 16 getrennt. Es können auch mehrere Zwischendecken, die untereinander verschieden beabstandet sein können, vorgesehen werden. Es können auch als Kegelmantel ausgebildete Zwischendecken vorgesehen werden. In diesem Falle können segmentartige Bereiche des Kegelmantels frei von Durchbrechungen gehalten werden. Entlang dieser Segmente kann dann Gas, welches sich unterhalb der kegelförmigen Zwischendecke sammelt, in Richtung auf die Behälteraussenwand oder den Innenzylinder 7 geleitet werden. Bei dem Einmischvorgang gelangt das in der Pufferzone 14 verweilende, neu dazugekommene Substrat in den Verteilungsraum 15 und verdrängt aus diesem die aliquote Menge durch die durchlässige Zwischendecke 16 in den darüberbefindlichen Reaktionsraum 19. Sind mehrere Zwischendecken vorhanden, so durchwandert das Substrat allmählich die zwischen diesen Decken befindlichen Reaktionsräume 19. Auf den Zwischendecken 16 lagern Füllkörper 17, die den Reaktionsraum 19 nur zum Teil ausfüllen. In den Reaktionsraum 19 münden Verbindungsleitungen 21, über welche das Substrat aus dem Reaktionsraum 19 in eine Verteilungskammer 50 gelangt. Die Verteilungskammer 50 bildet einen Teil einer Nachklärkammer 49, die vom Reaktionsraum 19 durch eine dichte Zwischendecke 8 getrennt ist, die sich von der Behälteraussenwand 1 zum Innenzylinder 7 erstreckt. Die Verteilungskammer 50 steht über bodenseitige Durchlässe 26 mit der Nachklärkammer 49 in Verbindung, so dass das der Verteilungskammer 50 zugeführte Substrat in den eigentlichen Nachklärraum 49 strömen kann. Hier findet nun eine Sedimentation statt. Das von Sinkstoffen befreite Substrat wird in einer in der Nachklärkammer 49 angeordneten Überlaufrinne 35 gesammelt und verlässt über eine von der Überlaufrinne 35 abgehende Ablaufleitung 39 den Reaktor. Der mit Sinkstoffen angereicherte, in der Nachklärkammer 49 noch vorhandene Teil wird, in noch zu beschreibender Weise, in die Pufferzone 14 zurückgeführt und gelangt somit nochmals in den Kreislauf.

In der Bodenplatte 2 ist ein Pumpensumpf 4 angeordnet, in dem Grobteile gesammelt und zusammen mit dem Überschussschlamm sowie den nicht abbaubaren Bestandteilen über einen Grundablass 40 aus dem Reaktor entfernt werden.

Am bodenseitigen Ende des Innenzylinders 7 befinden sich ausserhalb des Innenzylinders 7 nach oben abgedeckte Verteilungsflügel 6, die dazu dienen, die in der Pufferzone 14 gespeicherte Substratmenge beim noch zu beschreibenden Einmischvorgang möglichst gleichmässig in den Verteilungsraum 15 einzumischen. Ein Verteilungskegel 5 auf der Bodenplatte 2 dient dazu, eine strömungstechnisch günstige Umleitung der im Innenzylinder 7 senkrechten Strömung in eine horizontale Strömung zu erreichen. Durch eine allmähliche Querschnittseinengung im Durchgang zwischen der Abdeckung der Verteilungsflügel 6 und dem Verteilungskegel 5 bzw. der Bodenplatte 2 wird ein Düseneffekt erzielt, der einerseits eine Aufwirbelung des Grundschlammes und anderseits eine Rotationsbewegung im Verteilungsraum sicherstellt. Grobteile werden dabei allmählich, ähnlich wie Geschiebe in Flüssen, auf der Bodenplatte 2 weiterbewegt, bis sie zum vertieft angeordneten Pumpensumpf 4 gelangen und von dort dann über den Grundablass 40 mit dem Überschussschlamm aus dem Reaktor entfernt werden können. Anzahl, Form, Verhalten und Beschaffenheit der festen Inhaltsstoffe im Substrat sind bei der Formgebung und Anordnung der Verteilungsflügel 6 zu berücksichtigen.

Die obere Öffnung des Innenzylinders 7 ist durch eine Siphonglocke 10 abgedeckt, die sich mit ihrem seitlichen Mantel in den Raum zwischen der dichten Zwischendecke 8 und dem Zylindermantel 7 hinein erstreckt. Die dichte Zwischendecke 8 besitzt hiebei einen vertikalen Wandteil, der über einen horizontalen Bodenteil mit dem Mantel des Innenzylinders 7 verbunden ist. Von der Siphonglocke 10 führt eine Gasverbindungsleitung 27 in den Gasraum eines Gasdomes 9, der von der dichten Zwischendecke 8 ausgeht. In die Gasverbindungsleitung 27 ist ein Dreiwegeventil 28 eingebaut, zur Steuerung des von einem Druckerhöhungsgebläse 29 geförderten Gases aus einem Gasraum 48 der Nachklärkammer 49.

Eine Gasverbindungsleitung 30 ist vorgesehen, die mit der Saugseite des Druckerhöhungsgebläses 29 und mit dem Gasraum 48 der Nachklärkammer in Verbindung steht und in den Gasdom 9 mündet, wobei zwischen der Mündung der Leitung 30 in den Gasdom und der Abzweigung zur Saugseite des Druckerhöhungsgebläses 29 eine Gasabsperrklappe 32 eingebaut ist.

Eine Gasabgangsleitung 31 ist als Abzweigung der Gasverbindungsleitung 30 ausgebildet. Die Gasabgangsleitung 31 führt hiebei zum Verbraucher oder Gasspeicher.

Eine Gasabgangsleitung 51 führt aus dem Gasraum 46 unter der Siphonglocke 10 in den Gasraum 47 des Reaktionsraumes 19. Das in dem Gasraum 46 befindliche Ende der Gasabgangsleitung 51 ist mit einer Erweiterung 68 versehen. Aus dem Gasraum 47 des Reaktionsraumes 19 führt eine Gasabgangsleitung 23 in die Verteilungskammer 50 und mündet dort in ein vertikales Rohr 25, das bodenseitig und deckelseitig nach Art einer Hülse offen ist, so dass bei Gasdurchtritt durch die Gasabgangsleitung 23 im Rohr 25 eine Heberwirkung (Mammutheber) entsteht. Die Gasabgangsleitung 23 ist an ihrem in den Gasraum 47 des Reaktionsraumes 19 mündenden Ende mit einer Rohrerweiterung 24 versehen.

In der Nachklärkammer befindet sich ein insbes. hinsichtlich seiner Höhenlage variabler Ablauf 33, der gegebenenfalls zusätzlich zur Überlaufrinne 35 vorgesehen sein kann. Von dem variablen Ablauf 33 führt eine Leitung zu einem Siphon 37. In die Leitung ist vor Erreichen des Siphons 37 eine Absperrklappe 34 eingebaut. Der Siphon 37 ist der Ablaufleitung 39 vorgeschaltet, wobei ein Siphonschenkel einen Belüftungsstutzen 38 bildet, der andere Siphonschenkel mit einer ebenfalls ins Freie führenden Abdeckung 36 (für Reinigungszwecke od.dgl.) versehen ist. Von dem einen Siphonschenkel 37 geht eine Verbindungsleitung zur eigentlichen Ablaufleitung 39, die ebenfalls mit einem Belüftungsstutzen 38 versehen ist, dessen Niveau oberhalb der Abschlussdecke 3 des Reaktors liegt.

Die Zulaufleitung 12 ist mit einer Belüftung 13 versehen, um ein Aussaugen des Reaktors zu vermeiden, wenn sich in der Zulaufleitung 12 ein Unterdruck einstellt.

In der Verbindungsleitung 21, die vom Reaktionsraum 19 in die Verteilungskammer 50 führt, ist eine steuerbare Öffnung 22 eingebaut. Die Öffnung 22 ist schwimmergesteuert, wobei bei steigendem Flüssigkeitsspiegel in der Verteilungskammer 50 die Öffnung 22 geschlossen wird.

Über den Füllkörpern 17 bildet sich ein Schlammbett 18, das in der Zeichnung mit Punkten dargestellt ist. Das Schlammbett 18 kann im Maximum den gesamten Reaktionsraum 19 (den Gasdom 9 selbstverständlich ausgenommen) ausfüllen.

Im Reaktionsraum 19 sind Gasfallen 20 angeordnet, um das im Reaktionsraum 19 sich bildende Gas an einem Eintritt in die Verbindungsleitung 21 zwischen Reaktionsraum 19 und Verteilungskammern 50 zu hindern. Die Gasfallen 20 können auch als Ring 20', der sich von dem vertikalen Wandungsteil der Zwischendecke 8, insbes. abfallend gegen die Behälteraussenwand 1 erstreckt, ausgebildet sein. Der der Behälteraussenwand 1 zugekehrte Rand des Ringes 20' endet im Abstand von der Behälteraussenwand 1. Zusätzlich kann noch ein weiterer Ring 20' vorgesehen sein, dessen Innenrand unterhalb des erstgenannten Ringes 20' angeordnet ist und sich von der Behälteraussenwand 1 gegen den Innenzylinder 7 erstreckt, wobei zwischen den freien Rändern der Ringe 20' ein Durchlass freigehalten ist.

Mit 41–45 sind verschieden sich im Reaktor in verschiedenen Phasen des Verfahrensablaufes einstellende Flüssigkeitsspiegel bezeichnet, wobei auf diese einzelnen Phasen des Verfahrens noch einzugehen sein wird.

Zur Veranschaulichung des Verfahrensablaufes wird von einem beliebigen Zustand ausgegangen, wobei die einzelnen charakteristischen Verfahrensschritte verfolgt werden, die ohne Berücksichtigung ihrer zeitlichen Dauer beschrieben werden. Es sei daher angenommen, dass ein Einmischvorgang eben abgeschlossen wurde und sich ein Flüssigkeitsspiegel 42 in der Nachklärkammer 49, dem Reaktionsraum 19 und der Verteilungskammer 50 eingestellt hat. Im Gasdom 9, dem Gasraum 48, der Nachklärkammer 49, dem Reaktionsraum 19 und der Gasabgangsleitung 31 herrscht dabei der gleiche Gasdruck. Der Gasraum 46 ist mit Substrat gefüllt. Bedingt durch den Stand des Flüssigkeitsspiegels 42 findet kein Ablauf durch die Ablaufleitung 39 statt. Vorübergehend wird erforderlichenfalls auch der Zulauf über die Zulaufleitung 12 abgestellt. Nun wird die vom Mischvorgang her geöffnete Gasabsperrklappe 32 in der in den Gasdom 9 führenden Gasverbindungsleitung 30 geschlossen, das Druckerhöhungsgebläse 29 in Betrieb genommen und das Dreiwegventil 28 in Stellung I gebracht, in der der Weg vom Druckerhöhungsgebläse 29 her sowohl zum Gasdom 9 als auch zur Siphonglocke 10 freigegeben ist. Das nunmehr über den Gasdom 9 in den Reaktionsraum 19 gepresste Gas verdrängt nun den volumsaliquoten Teil des dort befindlichen Substrates über die durchlässige Zwischendecke bzw. Zwischendecken 16, den Verteilungsraum 15, die Pufferzone 14 in die Nachklärkammer 49. Die Tätigkeit des Druckerhöhungsgebläses 29 wird durch die Gasentwicklung im Reaktionsraum 19 unterstützt, da sich das im Reaktionsraum 19 entstehende Gas ja ebenfalls an der undurchlässigen Zwischendecke 8 sammelt. Der Flüssigkeitsspiegel 42 steigt in der Nachklärkammer 49 in Richtung Flüssigkeitsspiegel 43 und sinkt im Reaktionsraum 19 in Richtung auf den Flüssigkeitsspiegel 41. Dabei beginnt sich in der Siphonglocke 10 ein Gasraum auszubilden. Um die Vergrösserung dieses Gasraumes zu fördern, wird nach einer bestimmten vorgegebenen Zeit das Dreiwegventil 28 in Stellung II gebracht, d.h. so geändert, dass der gesamte Gasstrom nun über die Verbindungsleitung 27 in die Siphonglocke 10 strömt. Diese Gaszufuhr wird so lange beibehalten, bis der Flüssigkeitsspiegel unter den oberen Rand des Innenzylinders 7 sinkt. Dadurch wird die Kommunizierung zwischen der Pufferzone 14 und der Nachklärkammer 49 unterbrochen, so dass kein Substrat mehr aus der Pufferzone 14 in die Nachklärkammer 49 verdrängt werden kann. Dadurch kann Substrat nur mehr über die Verbindungsleitung 21 aus dem Reaktionsraum 19 in die Verteilungskammer 50 und über die Durchlässe 26 in die Nachklärkammer 49 verdrängt werden. Nun kann auch der Zulauf wieder in Betrieb genommen werden. Eine Kurzschlussströmung zum Ablauf ist nicht mehr möglich. Sobald dieser Zustand erreicht ist, kann das Druckerhöhungsgebläse 29 ausser Betrieb gesetzt werden. Die Gasbildung und damit das Entstehen von Druck im Reaktionsraum 19 und in der Siphonglocke 10 wird dadurch nicht beeinflusst. Die über den Schwimmer steuerbare Öffnung 22 schliesst, nachdem der steigende Flüssigkeitsspiegel 42 das Niveau des Schwimmers überschreitet. Ein Flüssigkeitsaustritt ist dann nur mehr über die obere Öffnung der Verbindungsleitung 21 möglich. Diese Öffnung liegt höher als das Überlaufniveau der Überlaufrinne 35, um durch die Wirkung des aus der Öffnung austretenden Substrates, das auf den Flüssigkeitsspiegel 43 fällt, die Schlammflocken von den an ihnen haftenden Gasblasen zu befreien, so dass die Schlammflocken absinken.

In der Siphonglocke 10 stellen sich unterschiedliche Flüssigkeitsspiegel 44 und 45 ein, sobald der Flüssigkeitsstand unter den oberen Rand des Innenzylinders 7 abgesunken ist. Um ein Absinken des Flüssigkeitsspiegels 45 unter den unteren Rand der Siphonglocke 10 zu verhindern und damit zu vermeiden, dass ein Gasübertritt aus der Siphonglocke 10 in die Nachbarkammer 49 erfolgt, ist oberhalb des unteren Randes der Siphonglocke 10 die Öffnung der Erweiterung 68 der Gasabgangsleitung 51 angeordnet. Sobald der im Reaktionsraum 19 sinkende Flüssigkeitsspiegel das Niveau 41 erreicht, strömt Gas aus dem Gasraum 47 des Reaktionsraumes 19 über die Gasabgangsleitung 23 in die Verteilungskammer 50. Durch die hiebei auftretende Mammutheberwirkung des Rohres 25 erfolgt eine Durchmischung in der Verteilungskammer 50, wodurch der Schwimmdeckenausbildung entgegengewirkt wird. Nun kann das Dreiwegventil 28 in die Stellung I zurückbewegt werden, womit der Gasraum 46 in der Siphonglocke 10 mit dem Gasdom 9 wieder verbunden ist.

Sobald in der Nachklärkammer 49 der höchste Flüssigkeitsspiegel 43 erreicht ist, wird die hier zuströmende Menge über die Überlaufrinne 35 der Ablaufleitung 39 zugeführt und verlässt den Reaktor. Die ablaufende Menge ist gleich der Zulaufmenge, vermehrt um die der Gasproduktion im Reaktionsraum 19 entsprechende Menge. Sobald im Reaktionsraum 19 der Flüssigkeitsspiegel 41 erreicht ist, entsprechen die in den einzelnen Funktionsräumen verdrängten Mengen der Zulaufmenge und somit auch der Ablaufmenge.

Der nächste Vorgang ist nun die Einmischung des neu zugeführten, in der Pufferzone 14 befindlichen Substrates in den Verteilungsraum 15. Hiezu wird die Gasabsperrklappe 32 in der Gasverbindungsleitung 30 geöffnet. In den nun verbundenen Gasräumen 48 der Nachklärkammer 49 mit einem Gasdruck ähnlich dem des in der Gasabgangsleitung 31 zufolge ihrer Verbindung mit einem Gasspeicher oder Verbraucher herrschenden Druck und des Druckes im Gasraum 47 des Reaktionsraumes 19 sowie dem Gasraum 46 unter der Siphonglocke 10 mit dem maximalen Spiegelunterschied entsprechenden höheren Gasdruck, kommt es zum Druckausgleich. Die Flüssigkeitsspiegel 44 und 45, die sich unter dem erhöhten Gasdruck eingestellt hatten, beginnen sich zu heben, bis der Raum unter der Siphonglocke 10 mit Substrat gefüllt ist. Nun ist wieder eine Verbindung zwischen der Nachklärkammer 49, der Pufferzone 14, dem Verteilungsraum 15 und dem Reaktionsraum 19 hergestellt. Das zwischen den Flüssigkeitsspiegeln 42 und 43 sich ergebende Flüssigkeitsvolumen, mengenmässig dem Gasvolumen 47 entsprechend, kann nun durch den Innenzylinder 7 über die Verteilungsflügel 6 in den Verteilungsraum 15 und in weiterer Folge in den Reaktionsraum 19 gelangen. Das Gas aus dem Gasraum 47 wird dabei in die Nachklärkammer 49 (über die Gasverbindungsleitung 30) verlagert. Dabei stellt sich der Flüssigkeitsspiegel 42 wieder ein, und nach Schliessen der Gasabsperrklappe 32 beginnt der bereits beschriebene Verfahrensablauf von neuem.

Bei der bisherigen Beschreibung wurde immer nur von einem Substrat gesprochen, da es sowohl für den Weg des Substrates sowie für den Funktionsablauf unabhängig ist, ob es sich um Substrate mit rein gelösten organischen Bestandteilen oder mit überwiegend festen Inhaltsstoffen handelt. Ebenso war bei der bisherigen Beschreibung unwesentlich, welches Ziel mit der anaeroben Behandlung des zugeführten Substrates verfolgt wird, in dem Sinne, ob diese Anlage zur Gewinnung von Energie aus organischen Substraten oder aber zur Entfernung organischer Stoffe aus dem Substrat im Sinne einer Reinigung Verwendung findet. Bei der Beschreibung der einzelnen Bereiche, der Erläuterung des darin enthaltenen Ideengutes mit dem Vorteil gegenüber bekannten Anlagen, müssen die oben erwähnten zwei Zielrichtungen jedoch mitberücksichtigt werden. Es wird in der folgenden Beschreibung also von Reinigungsanlagen bzw. Methangewinnungsreaktoren gesprochen. Auch die Substratbeschaffenheit ist nun ausschlaggebend. Eine Einteilung in mehrere Klassen von nur gelöst bis fest wäre zwar denkbar, jedoch auf Grund der vielen Möglichkeiten nicht sehr sinnvoll. Es wird also nur die überwiegende Beschaffenheit berücksichtigt.

Bei der zuvor beschriebenen Reaktorbauweise wird das bereits einmal durch den Reaktor geführte, dabei zum Teil mit aktivem Schlamm durchsetzte Substrat in der Pufferzone 14 durch den Zulauf langsam nach unten bewegt und letztlich aus dem Innenzylinder 7 verdrängt. Je nach Beschaffenheit des Zulaufes beginnt in der Pufferzone 14 die Hydrolysierung bzw. wird eine bereits vorher eingesetzte, bedingt durch die Temperaturoptimierung, rasch fortgesetzt. Bei Substraten mit leicht abbaubaren bzw. vorwiegend gelösten Inhaltsstoffen kann dadurch eine erhebliche pH-Verschiebung in den sauren Bereich erfolgen. Da aber die in der Pufferzone 14 vorhandenen aktiven Methanbakterien durch das neu hinzukommende Substrat langsam nach unten verdrängt werden, kommen sie durch das entstehende saure Milieu nicht zu Schaden, weil dieses sich oberhalb ausbildet. Es ist also möglich, auch stark sauren Zulauf ohne vorherige Behandlung, wie z.B. Neutralisierung, in den Reaktor zu geben, vorausgesetzt es handelt sich um organische Säuren. Die vom Innenzylinder 7 abgegrenzte Pufferzone 14 wird auch benötigt, um es zu ermöglichen, dass der bei einem Einmischvorgang aus dem oberen Bereich des Reaktionsraumes 19 in die Nachklärkammer 49 verdrängte Anteil über die Verteilungsflügel 6 in den Verteilungsraum 15 geleitet werden kann. Bei der Verwendung als Reinigungsanlage muss die vom Innenzylinder 7 abgegrenzte Pufferzone 14 nicht nur eine Verbindung zum Verteilungsraum 15 ermöglichen, sondern wesentlich daran ist, dass in der Pufferzone 14 der letzte Teil der dem variablen Niveauunterschied zwischen den Flüssigkeitsspiegeln 42 und 43 in der Nachklärkammer 49 entsprechenden Menge gespeichert wird, um diese Menge, die von aktiver Biomasse bereits weitgehend getrenntes Wasser darstellt, nach Beendigung des Einmischvorganges, wieder in die Nachklärkammer 49, ohne Anreicherung mit Biomasse in Form von Schlamm, verdrängen zu können, um somit zu gewährleisten, dass der Biomasseaustrag aus dem Reaktor über den Ablauf 39 möglichst gering ist.

Im Verteilungsraum 15 kommt es nun zum ersten Zusammentreffen des in der Pufferzone 14 gespeicherten, beim Einmischvorgang verdrängten, in den Reaktor neu eingebrachten Zulaufes mit der dort vorhandenen Biomasse. Der Einmischvorgang, abhängig von der maximalen Differenz der Flüssigkeitsspiegel 41 und 43 und den daraus resultierenden maximalen Strömungsgeschwindigkeiten, dauert aufgrund der grossen Durchtrittsquerschnitte trotz der auftretenden Beschleunigungs-, Umlenkungs- und Reibungsverluste nur kurze Zeit. Dadurch wird erreicht, dass eine plötzliche und sehr heftige Durchmischung stattfindet. Diese fast schlagartige Durchmischung erlaubt es auch, Substrate einzumischen, deren organischer Säuregehalt weit über dem Bereich liegt, in dem Methanbakterien lebensfähig sind. Nach diesem strömungsmässig turbulenten Einmischvorgang tritt, strömungstechnisch gesehen, eine Art Ruhephase ein. Dabei findet durch die Schwerkraft eine gewisse Separation statt. Das aus der Nachklärkammer 49 stammende, bereits einmal durch den Reaktor geführte und mit Biomasse vermischte Substrat wird entsprechend der Zulaufmenge aus der Pufferzone 14 verdrängt. Die dabei auftretenden Strömungen in der Verteilerkammer 15 sind im Verhältnis sehr klein und stören deshalb den Absetzvorgang kaum. Auch eine Schädigung des Schlammes auf Grund nur örtlichen, also konzentrierten und schwachen Einmischens tritt nicht ein. Der Vorteil dieses Einmischens gegenüber der Verteilung des Zulaufes über spezielle Rohrsysteme, wie sie bei Anaerobfiltern und Schlammbettreaktoren üblich sind, ist die Gewährleistung einer gleichmässigen Aufteilung auf den gesamten Querschnitt, und nicht nur über mehr oder weniger viele, über den Querschnitt verteilte punktförmige Eintrittsöffnungen. Auch die Gefahr einer unkontrollierten, ungleichmässigen Verteilung über den gesamten Querschnitt, sei es durch Verstopfung einzelner Austrittsöffnungen, Veränderung der hydraulischen Widerstände oder ähnlichem, ist nicht gegeben. Bei Anaerobfiltern und Schlammbettreaktoren ist es auch möglich, dass im unmittelbaren Austrittsbereich durch eine unkontrollierte pH-Verschiebung eine Schädigung der aktiven Biomasse eintritt. Dies kann auch durch überhöhten Zufluss an einem Punkt und der daraus folgenden Überlastung eintreten. Wird ein solcher Fehler nicht ehestens bemerkt und behoben, kommt es zum Absterben des aktiven Schlammes in unmittelbarer Umgebung der Eintrittsstelle. Diese «toten» Zonen vergrössern sich allmählich, bis es zum Zusammenbruch der Funktionsfähigkeit des gesamten Reaktors kommt.

Der Reaktionsraum 19 ist, wie bereits erwähnt, durch eine durchlässige Zwischendecke 16 vom Verteilungsraum 15 getrennt und zum Teil mit Füllkörpern 17 angefüllt, über welchen sich das Schlammbett 18 ausbildet. Die Aufgabe der durchlässigen Zwischendecke 16 ist es, die Füllkörper 17 und das darüber befindliche Schlammbett 18 am weiteren Absinken zu hindern. Die Zwischendecke 16 muss ausserdem so ausgebildet sein, dass sie während des Einmischvorgangs dem aufwärts strömenden Substrat einen möglichst kleinen Widerstand entgegensetzt. Die Füllkörper 17 haben zwei wesentliche Aufgaben zu erfüllen, nämlich als Trägermaterial für die Biomasse zu dienen und zusammen mit der Zwischendecke 16 das weitere Absinken des darüber befindlichen Schlammbettes 18 zu verhindern. Sie sollen also den Bakterien eine möglichst grosse Oberfläche zum Bewuchs bieten und der Anforderung entsprechen, sich während eines Einmischvorganges durch das aufwärtsströmende Substrat ebenfalls von der Zwischendecke 16 abzuheben und die Aufwärtsbewegung teilweise mitzumachen. Während der anschliessenden Ruhephase findet auf Grund der Schwerkraft ein Absetzen des Füllkörpers 17 statt. Dabei wird das aus dem unteren Bereich aufgestiegene Substrat langsam durchwandert. Die Füllkörper 17 sollen so aufgebaut sein, dass ihre Einzelteile sich volumsmässig stark unterscheiden und verschiedene Absetzgeschwindigkeiten aufweisen. Wichtig ist auch, dass die sich am raschesten absetzenden Teile gross genug sind und ein Durchfallen durch die Zwischendecke 16 nicht möglich ist. Im abgesetzten Zustand soll die Füllkörperstruktur nach oben volumsmässig immer kleiner werden, bis anschliessend das Schlammbett 18 beginnt und dessen weiteres Absinken verhindert wird. Der Vorteil dieser Füllkörper 17 gegenüber einem Anaerobfilter besteht darin, dass die Füllkörper durch das Anheben bei jedem Einmischvorgang und anschliessendem Absetzen, optimal mit dem für den Bakterienbewuchs als Nahrung dienenden Substrat in Berührung kommen, sich keine bevorzugten Durchströmungskanäle ausbilden können und somit die gesamte Füllkörpermasse gleichmässig am Prozessablauf beteiligt wird. Das über den Füllkörpern 17 befindliche Schlammbett 18 hat den Vorteil des hohen aktiven Biomasseanteiles je Volumseinheit. Da vor Erreichen des Schlammbettes 18 der Zulauf an frischem Substrat bereits durch mehrere Stufen des Reaktors musste, ist er ideal vorbereitet und kann beim anschliessenden Durchwandern des Schlammbettes die Eigenschaften desselben nicht wesentlich ändern. Auch die von den Füllkörpern 17 sich ablösenden Organismen bilden grosse freischwebende Bakterienkolonien, die sich stabilisierend auf das Schlammbett 18 auswirken. Bei Reinigungsanlagen, die mit überwiegend gelösten und leicht abbaubaren Substraten beschickt werden, kann durch die Unterteilung des Reaktors in mehrere einzelne Funktionsräume (z.B. Pufferraum, Verteilungsraum usw.) die Ausbildung von verschiedenem, den einzelnen Funktionsräumen entsprechendem selektierten aktiven Bakterienmaterials ermöglicht werden. Da im gesamten Reaktor aber ein breites Spektrum von Bakterien nach wie vor vorhanden ist, kann die Tätigkeit dieser «Spezialisten» räumlich begrenzt genutzt werden, ohne deren Nachteil ausgeliefert zu sein. Ändern sich die Randbedingungen und die einstigen «Spezialisten» werden unbrauchbar, so kommt es lediglich zu gewissen Verschiebungen innerhalb des Ablaufes, und weniger spezialisierte Bakterienstämme springen ein, ohne dass es zu einem Zusammenbruch des gesamten Prozessablaufes kommt. Der oberste Abschnitt des Reaktionsraumes 19 ist so gross zu wählen, dass sein Schlammspiegel unter der Verbindungsleitung 21 zur Verteilungskammer 50 liegt.

Mit Hilfe der Rohrerweiterung 24 bzw. 68 wird verhindert, dass grössere Flüssigkeitsspiegelschwankungen 41, 43 bzw. 44, 45 entstehen. Das über der Flüssigkeit befindliche Gas drückt jeweils das Niveau des Flüssigkeitsspiegels langsam nach unten. Sobald die Unterkante der Rohrerweiterung 24 bzw. 68 erreicht ist, beginnt die Oberflächenspannung zu wirken und ein weiteres minimales Absinken des Flüssigkeitsspiegels ist möglich. Sobald die erste Gasblase die Oberflächenspannung durchbricht und im Rohr aufsteigt, beginnt sich das Gleichgewicht schlagartig zu verschieben. Die in der Gasabgangsleitung 23 bzw. 51 entstehende hohe Gasströmung reisst nun Flüssigkeitsteile mit und wirkt wie ein Mammutheber. Obwohl der statische Flüssigkeitsgegendruck vorhanden ist, würde ohne Rohrerweiterung 24 bzw. 68 dieser Ablauf erst zum Stillstand kommen, wenn sich das Niveau des Flüssigkeitsspiegels 41 bzw. 45 beträchtlich nach oben und jenes des Flüssigkeitsspiegels 43 nach unten verschoben hat. Massgebend dafür ist die Differenz zwischen statischer und dynamischer Energielinie. Letztere wird wiederum von der Strömungsgeschwindigkeit beeinflusst. Diese ist in der Gasabgangsleitung 23 bzw. 51 durch den Gasüberdruck im Gasraum 47 des Reaktionsraumes 19 bzw. im Gasraum 46 vorgegeben. Auf Grund der Kontinuitätsbedingungen ist in der Rohrerweiterung 24 bzw. 68 die Strömungsgeschwindigkeit im proportionalen Verhältnis zu den Querschnitten kleiner. Dadurch ist es bei richtiger Bemessung möglich, die Spiegelschwankungen auf das gewünschte Mass zu reduzieren.

Die Verteilungskammer 50 ist so ausgebildet, dass in dieser keine so grossen Zwangsströmungen nach unten entstehen, die leichte, also nicht absetzbare Schlammteile mitreissen und in die eigentliche Nachklärkammer befördern.

Zur Vergleichmässigung der Ablaufmenge wird über den höhenmässig variablen, also sich dem Flüssigkeitsspiegel anpassenden Ablauf 33 eine Teilmenge abgezogen. Sobald der Ablauf des Substrates über die fix montierte Überlaufrinne 35 beginnt, wird durch Schliessen der Absperrklappe 34 der hydraulisch ungünstigere variable Ablauf 33 eingestellt.

Handelt es sich um keine Reinigungsanlage, erfolgt also ein ständiger Austrag von Schlammteilen und dient die Nachklärkammer 49 mehr zur Biomasse-Anreicherung und als Speicherung des benötigten Einmischvolumens, so entfällt der Verteilungszylinder 11, und die bereits erwähnte Methode der Schwimmdeckenzerstörung wird auf die gesamte Oberfläche des Substrates in der Nachklärkammer 49 angewandt. Auch an Stelle der langen Überlaufrinne 35 kann ein speziell ausgebildeter Überlauftrichter vorgesehen werden. Der Siphon 37 in der Ablaufleitung 39 dient dem Gasverschluss. Die Rohrstutzen 38 verhindern, dass durch eine Heberwirkung der den Gasverschluss sicherstellende Siphon 37 ausgesaugt wird. Bei Reinigungsanlagen ist durch diese Belüftungsstutzen 38 sowie durch die Ausbildung der Ablaufleitung 39 gewährleistet, dass eine möglichst hohe Sauerstoffeintragung in das abfliessende Substrat erfolgt. Diese Sauerstoffzuführung verhindert eine ungewollte Weiterführung des Anaerobprozesses und schafft die Möglichkeit der Entstehung eines aeroben Milieus.

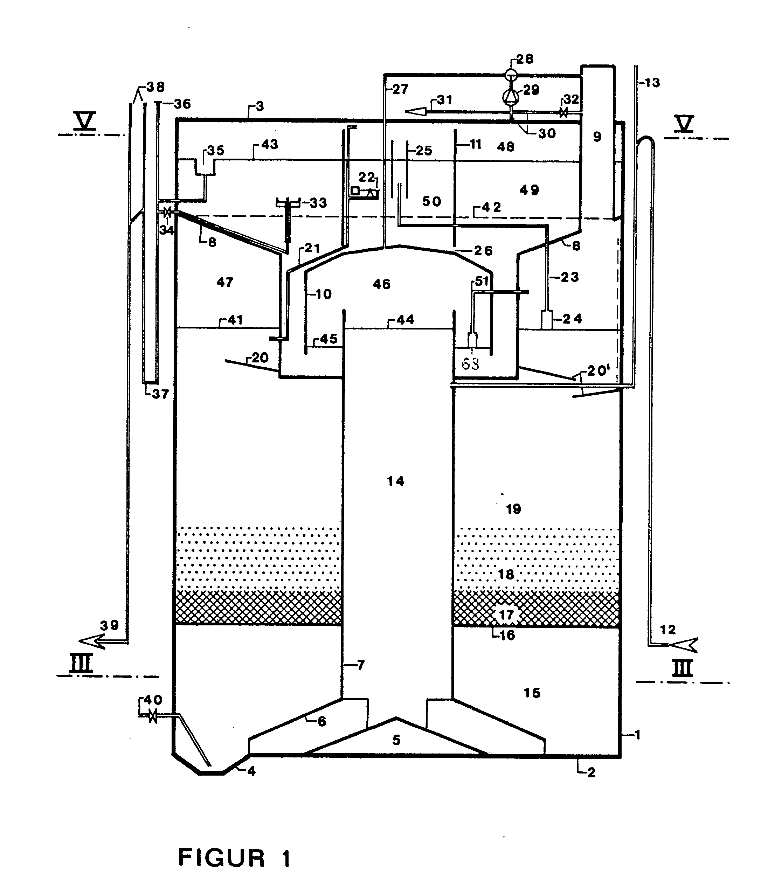

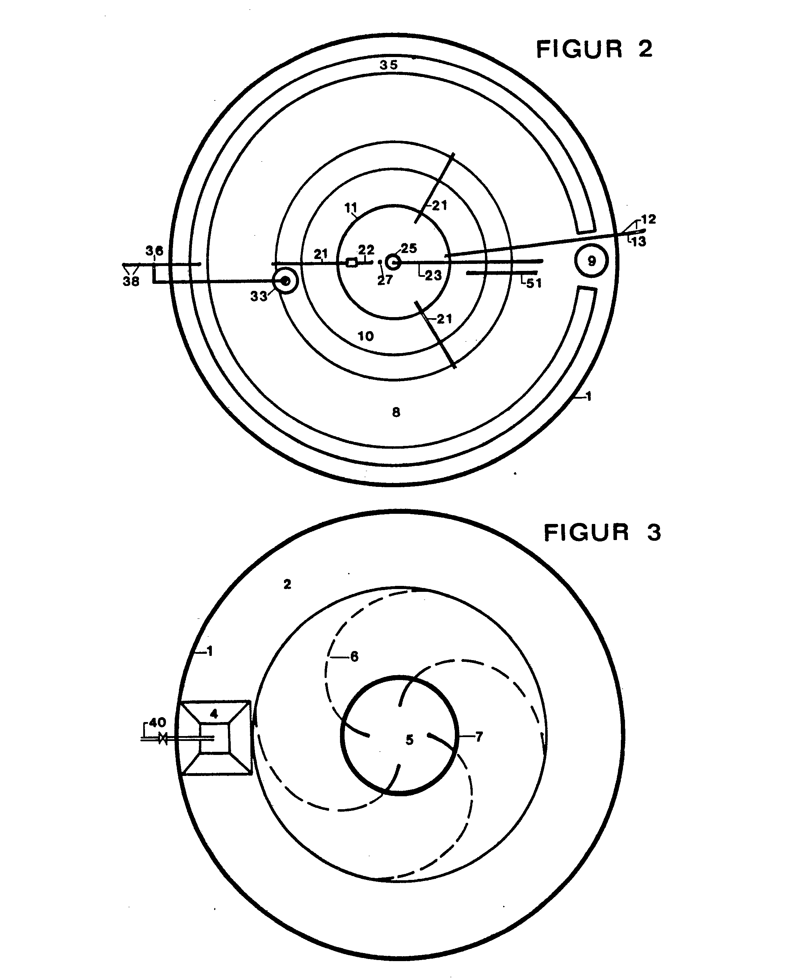

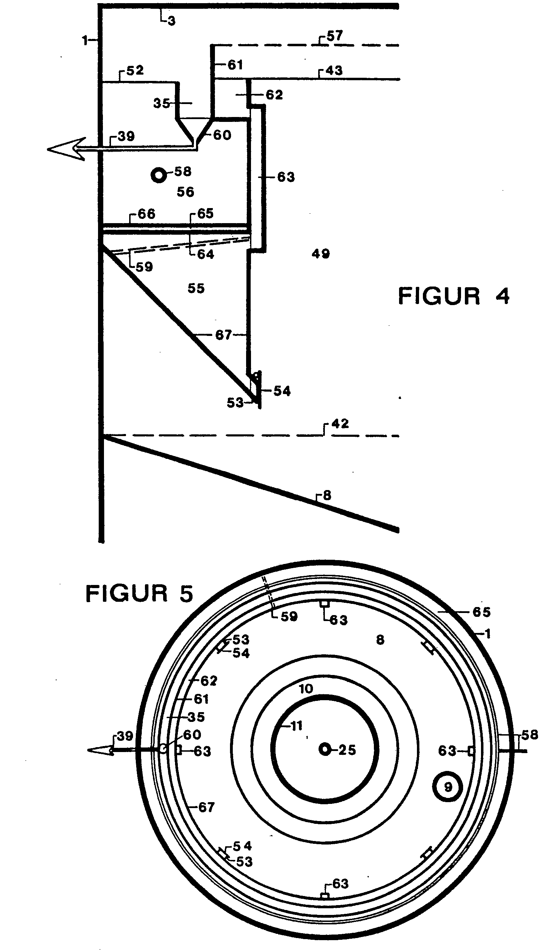

Die in den Fig. 4 und 5 dargestellte Filtereinrichtung kann in einen Reaktor gemäss den Fig. 1–3 eingebaut werden, u.zw. im Bereich der Überlaufrinne 35 oberhalb der dichten Zwischendecke 8. Die restlichen Einrichtungen des Reaktors bleiben erhalten.

Die Einrichtung besteht aus einer an die Überlaufrinne 35 seitlich anschliessenden, zusätzlichen Überlaufrinne 62, Zulaufleitungen 63 in einen Beschickungsraum 55 mit in die Nachklärkammer 49 führenden Rückspülöffnungen 53 unterhalb der Ebene eines Filters 65. Oberhalb des Filters 65 liegt ein Speicherraum 56 für die Rückspülung.

Das zu filternde Schlamm-Wasser-Gemisch gelangt, nach Erreichen des Niveaus 43, in die Überlaufrinne 62, von der es über die Zulaufleitungen 63 in den Beschickungsraum 55 strömt. Von hier aus wird das Schlamm-Wasser-Gemisch durch das horizontal angeordnete, den Querschnitt des Beschickungsraumes 55 abdeckende Filter 65 geleitet. Nach Füllen des oberhalb des Filters 65 befindlichen Speicherraumes 56 kann das nun bereits vom Schlamm befreite Wasser über die Überlaufrinne 35 über einen Einlauftrichter 60 der endgültigen Ablaufleitung 39 zufliessen. Die Anreicherung von Schlamm an der Filterunterseite erhöht den Filterwiderstand. Dies bewirkt ein Ansteigen des Wasserspiegels über das Niveau 43 hinaus. Um eine Zerstörung des Filters 65 durch den bei Ansteigen des Wasserspiegels sich erhöhenden Druck zu verhindern, ist eine Notüberlaufeinrichtung 61 direkt an die Überlaufrinne 35 angeschlossen. Nach Erreichen des durch die Oberkante der Notüberlaufeinrichtung 61 festgelegten, maximal möglichen Flüssigkeitsspiegels (Niveau 57) erfolgt ein Überströmen in die Überlaufrinne 35.

Zur Reinigung des Filters 65 wird das schlagartige Absinken des Flüssigkeitsspiegels aus dem Niveau 43 ausgenützt, das bei Einleitung der Mischphase im Reaktor auftritt. Dabei sinkt der Flüssigkeitsspiegel im Reaktor bis auf das minimale Niveau 42 in der Nachklärkammer 49 ab. Das im Verteilungsraum 55 enthaltene Schlamm-Wasser-Gemisch fliesst hierdurch über die Rückspülöffnung 53 ebenso plötzlich aus dem Beschickungsraum 55 ab. Die über dem Filter 65 im Speicherraum 56 befindliche Flüssigkeit strömt ebenso der Rückspülöffnung 53 zu und reisst dabei durch die hohe Strömungsgeschwindigkeit die an der Filterunterseite haftenden Schlammteile mit. Zusätzlich kann das Filter 65 noch mittels Flüssigkeit gereinigt werden, die über oberhalb des Filters 65 befindliche Düsen 58 auf die Oberseite des Filters 65 geleitet wird. Das Filter 65 wird auf Halterungen 64 aufgelegt und durch weitere Halterungen 66 am Aufschwimmen gehindert.

Die Rückspülöffnungen 53 sind mit einer Rückschlagsicherung 54 versehen. Diese ermöglicht ein langsames Füllen der Filtereinrichtung (Beschickungsraum 55 und Speicherraum 56) während des Ansteigens des Flüssigkeitsspiegels vom Niveau 42 auf das Niveau 43. Hiedurch wird die statische Belastung innerhalb der Filtereinrichtung möglichst klein gehalten. Nachdem der Flüssigkeitsspiegel das Niveau 43 erreicht hat, hindert die Rückschlagsicherung 54, dass wesentliche Wasser-Schlamm-Mengen aus dem Bereich der Rückspülöffnung 53 in den Beschickungsraum 55 gelangen.

Da die vorstehend beschriebene Filtereinrichtung sich im Regelfall entlang der ganzen Aussenwand des Reaktors erstrecken wird, ermöglicht eine beidseits offene, die Begrenzungswand 67 durchsetzende Gasableitung 59 ein Füllen auch des Bereiches unterhalb der Begrenzungswand 67 des Beschickungsraumes 55 mit dem Schlamm-Wasser-Gemisch.

## Patentansprüche

1. Verfahren zur anaeroben Behandlung von organischen Substraten, die in fester und gelöster Form vorliegen können, wobei die Reaktionsprodukte (z.B. $CH_4$, $CO_2$, Biomasse) gesammelt und dann ausgetragen werden, bei dem das zu behandelnde Substrat, gegebenenfalls nach zumindest teilweiser Versäuerung, mit Biomasse vermischt und durch ein Schlammbett hindurchgeleitet wird, wobei gegebenenfalls ein Teil des im Substrat sich bildenden Gases aus dem Substrat zur Verminderung von Turbulenzen abgezogen wird, das mit dem Schlammbett in Berührung gestandene Substrat in eine Verteilungskammer geleitet wird zur Trennung der absetzfähigen Schlammteile von den aufschwimmenden Schlammteilen, unter Schwerkrafteinfluss, wobei die aufschwimmenden Schlammteile zurückgehalten und die sich absetzenden Schlammteile verdrängt und gegebenenfalls einer Nachklärung zur Trennung des Schlammes (Biomasse) von Wasser unterzogen werden und dass Wasser zum Teil abgeführt und dabei gegebenenfalls mit Sauerstoff zwecks Beendigung des anaeroben Prozesses versetzt wird, wogegen der abgesetzte Schlamm als Biomasse zur Vermischung mit dem neu zugeführten Substrat eingesetzt wird.

2. Verfahren nach Anspruch 1, dadurch gekennzeichnet, dass der restliche Teil des Wassers, enthaltend geringe Mengen an Schlamm, zur Druckbelastung des mit dem neu zugeführten Substrat zu vermischenden Schlammes eingesetzt wird und dieser hiedurch in die Mischzone verdrängt wird und dass gegebenenfalls nach der Verdrängung des Schlammes, das geringe Mengen an Schlamm enthaltende Wasser, zumindest teilweise wieder in die Nachklärung rückgeführt wird.

3. Verfahren nach Anspruch 1, dadurch gekennzeichnet, dass das sich aus dem Substrat im Zuge der Durchwanderung des Schlammbettes bildende Gas zumindest teilweise in das in der Verteilungskammer befindliche Substrat zur Zerstörung einer etwa vorhandenen Schwimmdecke eingeleitet wird.

4. Verfahren nach Anspruch 1, dadurch gekennzeichnet, dass nach dem Vermischen mit Biomasse das Substrat durch ein Bett aus mit Biomasse bewachsenen Füllkörpern hindurchgeleitet wird.

5. Verfahren nach Anspruch 4, dadurch gekennzeichnet, dass beim Hindurchleiten des Substrates durch das Bett aus Füllkörpern und das Schlammbett, die Füllkörper und der Schlamm entgegen der Schwerkraft angehoben werden und anschliessend, der Schwerkraft folgend, sich absetzend, das Substrat durchwandern.

6. Einrichtung zur Durchführung eines Verfahrens nach einem der Ansprüche 1 bis 5, mit einem Reaktor, in dem eine Zufuhrleitung für das Substrat mündet und von dem eine Abfuhrleitung für das behandelte Substrat abgeht, wobei im Reaktor ein stehender Innenzylinder (7), insbes. zentrisch, angeordnet ist, dieser Innenzylinder (7) eine dichte Zwischendecke (8) durchsetzt, die den Raum zwischen der Behälteraussenwand (1) und dem Innenzylinder (7) abdeckt, wobei der Innenzylinder (7) mit seinem oberen, offenen Rand in den Raum zwischen der Zwischendecke (8) und der Abschlussdecke (3) des Reaktors hineinragt und der Innenraum (Pufferraum (14)) des Innenzylinders bodenseitig mit dem Raum oberhalb der Bodenplatte (2) des Reaktors in Verbindung steht, in dem Raum oberhalb der Bodenplatte eine durchlässige Zwischendecke (16) angeordnet ist, in dem Reaktor ein bevorzugt als Überlaufrinne (35) ausgebildeter Abzug angeordnet ist, an dem die Ablaufleitung (39) angeschlossen ist, dass der Raum unterhalb der Zwischendecke (8) mit dem Raum oberhalb der Zwischendecke (8) über mindestens eine, bevorzugt die Zwischendecke (8) durchsetzende Verbindungsleitung (21) verbunden ist, dass in dem Raum oberhalb der Zwischendecke (8) bevorzugt ein Verteilungszylinder (11) angeordnet ist, in den die Verbindungsleitung (21) einmündet.

7. Einrichtung nach Anspruch 6, dadurch gekennzeichnet, dass der bevorzugt als Überlaufrinne (35) ausgebildete Abzug in dem Raum zwischen der Abschlussdecke (3) und der dichten Zwischendecke (8) angeordnet ist, wobei die Mündung der Zulaufleitung (12) unterhalb der Zwischendecke (8) innerhalb des Innenzylinders (7) liegt.

8. Einrichtung nach einem der Ansprüche 6–7, dadurch gekennzeichnet, dass der Pufferraum (14) des Innenzylinders (7) bodenseitig über Einmischvorrichtungen, die bevorzugt von durch Verteilungsflügel (6) begrenzte Kanäle gebildet sind, mit dem Raum oberhalb der Bodenplatte (2) des Reaktors in Verbindung steht und dass gegebenenfalls die bodenseitige Begrenzung der Kanäle von einem Verteilungskegel (5) gebildet ist, der von der Bodenplatte (2) aufragt.

9. Einrichtung nach einem der Ansprüche 6 bis 8, dadurch gekennzeichnet, dass der obere Rand des Innenzylinders (7) in eine Siphonglocke (10) hineinragt, wobei der Raum unter der Siphonglocke (10) unterhalb des oberen Randes des Innenzylinders (7) mit dem Raum oberhalb der Zwischendecke (8) in Verbindung steht.

10. Einrichtung nach Anspruch 9, dadurch gekennzeichnet, dass die Siphonglocke (10) bodenseitig offen ist und der Bodenrand der Siphonglocke (10) von der Zwischendecke (8) und die Seitenwand der Siphonglocke (10) vom Innenzylinder (7) beabstandet sind.

11. Einrichtung nach Anspruch 9 oder 10, dadurch gekennzeichnet, dass eine Steuereinrichtung zur Beeinflussung des Druckes unter der Siphonglocke (10) vorgesehen ist.

12. Einrichtung nach Anspruch 9 oder 10 und 11, dadurch gekennzeichnet, dass in den Raum zwischen der Seitenwand des Innenzylinders (7) und der Siphonglocke unterhalb des oberen Randes des Innenzylinders (7) eine Gasleitung (51), bevorzugt mit einer an ihrem Ende vorgesehenen Erweiterung (68) mündet, wobei diese Gasleitung (51) mit einer Druckquelle in Verbindung steht, die im Mündungsquerschnitt einen dem Maximaldruck unter der Siphonglocke (10) entsprechenden Druck liefert, wobei vorzugsweise die Druckquelle das sich unter der Zwischendecke (8) sammelnde Gas ist und die zweite Mündung der Gasleitung (51) in dem Gasraum liegt.

13. Einrichtung nach einem der Ansprüche 9 bis 12, dadurch gekennzeichnet, dass in die Siphonglocke (10), bevorzugt im Bereich der höchsten Stelle, eine Gasabfuhrleitung (27) mündet, die bevorzugt mit einem von der Zwischendecke (8) ausgehenden Gasdom (9) in Verbindung steht, dessen Decke höher liegt als das Niveau des Abzuges aus dem Raum oberhalb der Zwischendecke (8).

14. Einrichtung nach Anspruch 13, dadurch gekennzeichnet, dass die Gasabfuhrleitung (27) aus der Siphonglocke über ein Dreiwegeventil (28) mit dem Gasdom (9) in Verbindung steht, das an die Druckseite eines Druckerhöhungsgebläses (29) angeschlossen ist, das saugseitig mit dem Gasdom (9), dem Raum unter der Abschlussdecke (3) des Reaktors und einer Gasabgangsleitung (31), die vom Reaktor wegführt, verbunden ist, wobei in die zum Gasdom (9) führende Gasabgangsleitung (30) ein Absperrorgan, z.B. eine Absperrklappe (32), eingesetzt ist.

15. Einrichtung nach einem der Ansprüche 6 bis 14, dadurch gekennzeichnet, dass in den, in dem Raum oberhalb der Zwischendecke (8) angeordneten Verteilungszylinder (11) eine Gasabgangsleitung (23) einmündet, die im Raum unterhalb der Zwischendecke (8) in einem Niveau endet, das tiefer liegt als der obere Rand des Innenzylinders (7), wobei gegebenenfalls die Mündung vom Ende einer Rohrerweiterung (24) der Gasabgangsleitung (23) gebildet ist.

16. Einrichtung nach Anspruch 15, dadurch gekennzeichnet, dass der oberhalb der Zwischendecke (8) befindliche Mündungsquerschnitt der Gasabgangsleitung (23) innerhalb eines beiseits offenen Rohres (25) liegt.

17. Einrichtung nach Anspruch 6 oder 7, dadurch gekennzeichnet, dass die den Raum unter der Zwischendecke (8) mit dem Raum über der Zwischendecke (8) verbindende Verbindungsleitung (21) zwischen ihren Enden und im Raum oberhalb der Zwischendecke (8), jedoch unterhalb des Niveaus des Abzuges (Überlaufrinne 35) mit einer steuerbaren Öffnung (22) versehen ist, wobei zur Steuerung vorzugsweise ein Schwimmkörper vorgesehen ist, mittels welchem ein Abschliessen der Öffnung (22) bei sich änderndem Flüssigkeitsspiegel erfolgt.

18. Einrichtung nach einem der Ansprüche 6 oder 7 oder 8–17, dadurch gekennzeichnet, dass oberhalb der Zwischendecke (8) und unterhalb des Niveaus des Abzuges (Überlaufrinne 35) ein höhenvariabler Ablauf (33) angeordnet ist, der über eine bevorzugt mit einem Absperrorgan (Absperrklappe 34) versehene Leitung mit der Ablaufleitung (39) in Verbindung steht.

19. Einrichtung nach einem der Ansprüche 6 bis 18, dadurch gekennzeichnet, dass die Ablaufleitung (39) unter Zwischenschaltung eines gegebenenfalls ausserhalb des Reaktors angeordneten Siphons (37) mit dem Abzug (Überlaufrinne 35) in Verbindung steht und dass gegebenenfalls die Ablaufleitung (39) mit mindestens einem Belüftungsstutzen (38) versehen ist.

20. Einrichtung nach einem der Ansprüche 6 bis 17, dadurch gekennzeichnet, dass die unterhalb der Zwischendecke (8) gelegene Mündung der den Raum unterhalb mit dem Raum oberhalb der Zwischendecke (8) verbindenden Verbindungsleitung (21) durch Gasfallen (20) abgedeckt ist.

21. Einrichtung nach einem der Ansprüche 6 bis 20, dadurch gekennzeichnet, dass unterhalb der Zwischendecke (8) mindestens ein, den Raum zwischen der Behälteraussenwand (1) und dem Innenzylinder (7) überspannender durchlässiger Zwischenboden (16) angeordnet ist, auf welchem ein Bett aus Füllkörpern (17) ablagerbar ist.

22. Einrichtung nach einem der Ansprüche 6 oder 7 oder 8 bis 23, dadurch gekennzeichnet, dass dem, bevorzugt als Überlaufrinne (35) ausgebildeten Abzug (strömungsmässig) ein Filter (65) vorgeschaltet ist.

23. Einrichtung nach Anspruch 22, dadurch gekennzeichnet, dass das Filter (65) den Boden eines Speicherraumes (56) bildet, der in dem Raum oberhalb der Zwischendecke (8) liegt, wobei die Seitenwandungen (61, 1) des Speicherraumes (56) das Überlaufniveau des im Speicherraum (56) angeordneten Abzuges (Überlaufrinne (35)) überragen, so dass das zu filternde Substrat, auf seinem Weg zum Abzug, das Filter (65) von unten anströmt.

24. Einrichtung nach Anspruch 23, dadurch gekennzeichnet, dass die Seitenwandung (61) oberhalb des Überlaufniveaus des Abzuges mit Durchtrittsöffnungen versehen ist und oder dass die Seitenwandung (61) im Abstand von der Abschlussdecke (3) des Reaktors endet.

25. Einrichtung nach Anspruch 23, dadurch gekennzeichnet, dass unterhalb des Filters (65) ein Beschickungsraum (55) angeordnet ist, der durch Begrenzungswände (67) von dem Raum (49) oberhalb der Zwischendecke (8) getrennt ist, jedoch mittels mit Rückschlagsicherungen (54) ausgestatteten Rückspülöffnungen (53) mit dem Raum oberhalb der Zwischendecke (8) verbindbar ist und dass in den Raum unterhalb des Filters (65) Zulaufleitungen (63) münden, die von einem Überlauf (62) ausgehen, dessen Überlaufniveau in ungefähr gleicher Höhe wie das Überlaufniveau des Abflusses in der bodenseitig durch das Filter (65) begrenzten Kammer liegt.

**Revendications**

1. Procédé de traitement anaérobique de substrats organiques présents sous forme solide ou liquide, les produits réactionnels (par exemple $CH_4$, $CO_2$, biomasse) étant ramassés et puis évacués, selon lequel le substrat à traiter, le cas échéant après une acidification au moins partielle, est mêlé avec biomasse et conduit à travers un lit de boue, une partie des gaz formant dans le substrat étant retraite, le cas échéant, pour réduire les turbulences, le substrat ayant eu contact avec le lit de boue étant conduit dans une chambre de distribution pour la séparation des composants de boue sédimentables des composants de boue flottants sous l'influence de gravité, les composants de boue flottants étant retenus et les composants de boue déposants étant déplacés et, le cas échéant, soumis à une décantation finale pour la séparation de la boue (biomasse) de l'eau et de l'eau étant partiellement évacuée et, le cas échéant, mélangée avec de l'oxygène pour terminer le procédé anaérobique, la boue déposée étant utilisée comme biomasse pour le mélange avec le substrat introduit de nouveau.

2. Procédé selon la revendication 1, caractérisé en ce que la partie résiduelle de l'eau contenant un petit volume de boue est utilisée pour la charge de pression de la boue à mêler avec le substrat introduit de nouveau et que la boue est de ce fait déplacée vers la zone de mélange et que, les cas échéant, l'eau contenant le petit volume de boue est recyclée dans la décantation finale après le déplacement de la boue.

3. Procédé selon la revendication 1, caractérisé en ce que le gaz formant dans le substrat au cours du passage à travers le lit de boue est au moins partiellement introduit dans le substrat présent dans la chambre de distribution pour la destruction d'un chapeau possiblement formé.

4. Procédé selon la revendication 1, caractérisé en ce que suivant le mélange avec la biomasse, le substrat est conduit à travers d'un lit formé de corps de remplissage couverts de biomasse.

5. Procédé selon la revendication 4, caractérisé en ce que, pendant le passage du substrat à travers le lit de corps de remplissage et le lit de boue, les corps de remplissage et la boue sont levés contre la force de gravité et traversent ensuite le substrat suivant la gravité et se déposant.

6. Dispositif pour la réalisation d'un procédé selon une des revendications 1 à 5, avec un réacteur dans lequel débouche une conduite d'alimentation pour le substrat et dont s'étend une conduite d'évacuation pour le substrat traité, un cylindre intérieur debout (vertical) (7) étant pourvu, en particulier centré, dans le réacteur et traversant un plafond (8) épais intermédiaire couvrant l'espace entre la paroi externe (1) du récipient et le cylindre (7) intérieur, le cylindre intérieur (7) saillant par son bord supérieur ouvert dans l'espace entre le plafond intermédiaire (8) et le plafond de fermeture (3) du réacteur et l'espace intérieur (espace de tamponnage 14) du cylindre intérieur est relié à côté du fond à l'espace au dessus de la plaque de fond (2) du réacteur, un plafond perméable(16) étant pourvu au dessus de la plaque de fond, un canal de décharge, de préférence sous forme de trop-plein (35), auquel la conduite d'évacuation (39) est reliée, étant pourvu dans le réacteur, que l'espace au dessous le plafond intermédiare (8) est relié à l'espace au dessus le plafond intermédiaire (8) par au moins une conduite de raccordement (21) de préférence traversant le plafond intermédiare (8) et qu'un cylindre distributeur (11) dans lequel débouche la conduite de raccordement (21) est de préférence pourvu dans l'espace au dessous du plafond intermédiaire (8).

7. Dispositif selon la revendication 6, caractérisé en ce que le canal de décharge, formé de préférence comme trop-plein (35), est pourvu dans l'espace entre le plafond de fermeture (3) et le plafond épais intermédiaire (8), la bouche de la conduite d'alimentation (12) étant située au dessous du plafond intermédiaire (8) à l'intérieur du cylindre intérieur (7).

8. Dispositif selon une des revendications 6 et 7, caractérisé en ce que l'espace de tamponnage (14) du cylindre intérieur (7) est relié, à côté du fond, par l'intermédiaire de dispositifs de mélange formés de préférence par canaux définis par des ailes de distribution (6) à l'espace au dessus de la plaque de fond (2) du réacteur et que, le cas échéant, la limitation des canaux à côté du fond est formée par un cône distributeur (5) saillant de la plaque de fond (2).

9. Dispositif selon une des revendications 6 à 8, caractérisé en ce que le bord supérieur du cylindre intérieur (7) saillit dans une cloche de siphon (10), l'espace au dessous de la cloche de siphon (19) étant relié au dessous du bord supérieur du cylindre intérieur (7) à l'espace au dessus du plafond intermédiaire. (8).

10. Dispositif selon la revendication 9, caractérisé en ce que la cloche de siphon (10) est ouverte à côté du fond et que le bord de fond de la cloche de siphon (10) est éloigné du plafond intermédiaire (8) et la paroi latérale de la cloche de siphon (10) est éloignée du cylindre intérieur (7).

11. Dispositif selon la revendication 9 ou 10, caractérisé en ce qu'un organe de commande pour influencer la pression sous la cloche de siphon (10) est pourvu.

12. Dispositif selon la revendication 9 ou 10 et 11, caractérisé en ce qu'une conduite de gaz (51), de préférence pourvue d'un évasement (68) à son extrémité, débouche dans l'espace entre la paroi latérale du cylindre intérieur (7) et la cloche de siphon au dessous du bord supérieur du cylindre intérieur (7), ladite conduite de gaz (51) étant reliée à une source de pression fournissant dans la section droite de la bouche une pression correspondant à la pression maximale sous la cloche de siphon (10), la source de pression étant de préférence le ganz accumulant sous le plafond intermédiaire (8) et la deuxième bouche de la conduite de gaz (51) étant située dans l'espace de gaz.

13. Dispositif selon une des revendications 9 à 12, caractérisé en ce qu'une conduite de décharge de gaz (27) débouche dans la cloche de siphon (10), de préférence dans la zone de l'endroit le plus haut, que la conduite (27) est de préférence reliée à un dôme de gaz (9) émanant du plafond intermédiaire (8), le plafond du dôme de gaz étant situé plus haut que le niveau de la conduite de décharge de l'espace au dessus du plafond intermédiaire (8).

14. Dispositif selon la revendication 13, caractérisé en ce que la conduite de décharge de gaz (27) de la cloche de siphon est reliée par l'intermédiaire d'une vanne à trois voies (28) au dôme de gaz (29), la vanne étant reliée au côté refoulement d'un ventilateur de surpression (29) relié au côté aspiration au dôme de gaz (9), à l'espace au dessous du plafond de fermeture (3) du réacteur et une conduite de décharge de gaz (31) émanant du réacteur, la conduite de décharge de gaz (30) menant au dôme de gaz (9) étant pourvue d'un organe d'arrêt, par exemple un clapet d'arrêt (32).

15. Dispositif selon une des revendications 6 à 14, caractérisé en ce qu'une conduite de décharge de gaz (23) débouche dans le cylindre distributeur (11) pourvu dans l'espace au dessus du plafond intermédiaire (8) et se termine dans l'espace au dessous du plafond intermédiaire (8) sur un niveau situé plus bas que le bord supérieur du cylindre intérieur (7), la bouche étant formée, le cas échéant, par l'extrémité d'un évasement de tuyau (24) de la conduite de décharge de gaz (23).

16. Dispositif selon la revendication 15, caractérisé en ce que la section droite de la bouche de la conduite de décharge de gaz (23) située au dessus du plafond intermédiaire (8) est située dedans un tuyau (25) ouvert aux deux extrémités.

17. Dispositif selon la revendication 6 ou 7, caractérisé en ce que la conduite de raccordement (21) reliant l'espace au dessous du plafond intermédiaire (8) à l'espace au dessus du plafond intermédiaire (8) est pourvue entre ses extrémités et dans l'espace au dessus le plafond intermédiaire (8), mais au dessous le niveau de la conduite de décharge (trop-plein 35) d'un orifice gouvernable (22), un corps flottant au moyen duquel la fermeture de l'orifice (22) en cas du changement du niveau du liquide est effectuée étant de préférence pourvu pour ladite commande.

18. Dispositif selon une des revendications 6 ou 7 ou 8 à 17, caractérisé en ce qu'une décharge (33) variable en hauteur reliée à la conduite de décharge (39) par l'intermédiaire d'une conduite de préférence pourvue d'un organe d'arrêt (clapet d'arrêt 34) est pourvue au dessus du plafond intermédiare (8) et au dessous du niveau de la décharge (trop-plein 35).

19. Dispositif selon une des revendications 6 à 18, caractérisé en ce que la conduite de décharge (39) est reliée, par l'intermédiare d'un siphon (37) disposé, le cas échéant, à l'extérieur du réacteur, à la décharge (trop-plein 35) et que la conduite de décharge (39) est pourvue, le cas échéant, d'au moins une tubulure de ventilation (d'aération) (38).

20. Dispositif selon une des revendications 6 à 17, caractérisé en ce que la bouche de la conduite de raccordement (21) reliant l'espace au dessous à l'espace au dessus du plafond intermédiaire (8) est située au dessous du plafond intermédiaire (8) et couverte de tubes sorbants (20).

21. Dispositif selon une des revendications 6 à 20, caractérisé en ce qu'au moins un fond intermédiaire (16) perméable sur lequel un lit de corps de remplissage (17) peut être placé et qui jette un pont entre l'espace entre la paroi du récipient (1) et le cylindre intérieur (7) est pourvu au dessous du plafond intermédiaire (8).

22. Dispositif selon une des revendications 6 ou 7 ou 8 à 23, caractérisé en ce qu'un filtre (65) est placé en amont (au sens du courant) de la décharge de préférence formée comme trop-plein (35).

23. Dispositif selon la revendication 22, caractérisé en ce que le filtre (65) forme le fond d'un volume de retenue (56) placé dans l'espace au dessus du plafond intermédiare (8), les parois latérales (61, 1) du volume de retenue (56) saillant au dehors du niveau de debordement de la décharge (trop-plein 35) disposée dans le volume de retenue (56) de manière que le substrat à filtrer coule sur le filtre (65) d'en bas sur son chemin vers la décharge.

24. Dispositif selon la revendication 23, caractérisé en ce que la paroi latérale (61) est pourvue d'orifices de passage au dessus du niveau de débordement de la décharge et/ou la paroi latérale (61) se termine à distance du plafond de fermeture (3) du réacteur.

25. Dispositif selon la revendication 23, caractérisé en ce qu'un volume d'alimentation (55) séparé de l'espace (49) au dessus du plafond intermédiaire (8) au moyen de parois de limitation (67), mais relié à l'espace au dessus du plafond intermédiaire (8) par l'intermédiaire d'orifices (53) de lavage à contre-courant pourvus de clapets de non-retour (54) est disposé au dessous du filtre (65) et que des conduites d'alimentation (63) émanant d'un trop-plein (62) dont le niveau de débordement est situé à environ le même niveau que le niveau de débordement de la décharge dans la chambre limitée à côté du fond par le filtre débouchent dans l'espace au dessous du filtre.

## Claims

1. A process for the anaerobic treatment of organic substrates, which may be present in solid or dissolved form, wherein the reaction products (for instance $CH_4$, $CO_2$, biomass) are collected and then discharged, in which the substrate to be treated, if necessary after at least partial acidification, is mixed with biomass and passed through a sludge bed, wherein, if necessary, part of the gas forming in the substrate is reduced from the substrate to reduce turbulence, the substrate that has been in contact with the sludge bed is led into a distribution chamber for separation of the depositable sludge particles from the floating sludge portions under the influence of gravity, wherein the floating sludge portions are retained whereas the depositable sludge portions are displaced and, if necessary, subjected to a post-clarification process for separation of the sludge (biomass) from the water, and the water is partly discharged and, on this occasion, if necessary, is treated with oxygen for terminating the anaerobic process while the sludge is used as biomass to be mixed with newly introduced substrate.

2. A process according to claim 1, characterized in that the remaining portion of the water containing reduced amounts of sludge is utilized for pressure-charging the sludge to be mixed with the newly introduced substrate, the same thereby being displaced into the mixing zone and that, if necessary, after displacement of the sludge, the water containing reduced amounts of sludge is recycled at least partially to the postclarification unit.

3. A process according to claim 1, characterized in that the gas forming from the substrate as it traverses the sludge bed is at least partially introduced into the substrate present in the distribution chamber for the destruction of any existing floating scum.

4. A process according to claim 1, characterized in that the substrate after being mixed with biomass is passed through a bed of filler bodies with growths of biomass.

5. A process according to claim 4, characterized in that on passage of the substrate through the bed of filler bodies and the sludge bed, the filler bodies and the sludge are lifted counter to the force of gravity, whereafter, under the influence of gravity, on settling down they traverse the substrate.

6. An apparatus for carrying out the process according to any one of the claims 1 to 5, comprising a reactor, into which there discharges a supply line for the substrate and from whence there parts a discharge line for the substrate treated, an upright inside cylinder (7) being arranged in particular concentrically inside the reactor, said inside cylinder (7) traversing a compact intermediate ceiling (8) that covers the space between the vessel outer wall (1) and the inside cylinder (7), wherein the inside cylinder (7) by its upper, open edge protrudes into the space between the intermediate ceiling (8) and the shut-off covering (3) of the reactor, and the inside space (buffer chamber (14)) of the inside cylinder is in contact via the bottom with the space above the bottom plate (2) of the reactor, a permeable intermediate ceiling being arranged within the space above the bottom plate, a discharge preferably formed as an verflow channel (35) being arranged inside the reactor to which the discharge line (39) is connected, the space below the intermediate ceiling (8) being connected to the space above the intermediate ceiling (8) over at least one connecting line (21) that preferably traverses the intermediate ceiling (8), and a distribution cylinder (11) into which the connecting line (21) discharges preferably being arranged in the space above the intermediate ceiling (8).

7. An apparatus according to claim 6, characterized in that the drain that is preferably formed as an overflow channel (35) is arranged between the shut-off covering (3) and the compact intermediate ceiling (8), wherein the discharge of the supply line (12) lies below the intermediate ceiling (8) and inside the inner cylinder (7).

8. An apparatus according to claim 6 or 7, characterized in that the buffer chamber (14) of the inner cylinder (7) is in contact at the bottom via mixing units preferably formed as grooves defined by distribution vanes (6) with the space above the bottom plate (2) of the reactor and that, if necessary, the bottom limitation of the channels is formed by a distributor cone (5) which protrudes from the bottom plate (2).

9. An apparatus according to any one of the claims 6 to 8, characterized in that the upper edge of the inner cylinder (7) protrudes into a siphon bell jar (10), wherein the space below the siphon bell jar (10) is in contact underneath the upper edge of the inner cylinder (7) with the space above the intermediate ceiling (8).

10. An apparatus according to claim 9, characterized in that the siphon bell jar (10) is open at the bottom and the bottom edge of the siphon bell jar (10) is located at a distance from the intermediate ceiling (8) and the side wall of siphon bell jar (10) is located at a distance from inner cylinder (7).

11. An apparatus according to claim 9 or 10, characterized in that a control means for controlling the pressure below the siphon bell jar (10) is provided.

12. An apparatus according to claim 9 or 10 and 11, characterized in that a gas line (51), preferably with a widened portion (68) at its end, discharges into the space between the side wall of the inner cylinder (7) and the siphon bell jar (10) below the upper edge of inner cylinder (7), wherein said gas line (51) is in contact with a pressure source which in the discharge cross-section delivers a pressure corresponding to the maximum pressure prevailing below the siphon bell jar (10), wherein, preferably, the pressure source will be the gas collected below the intermediate ceiling (8) and the second discharge of gas line (51) lies in the gas chamber.

13. An apparatus according to any one of the claims 9 to 12, characterized in that a gas discharge line (27) discharges into the siphon bell jar (10), preferably in the area of its highest level, which line is preferably in contact with a gas dome (9) leading off the intermediate ceiling (8), the ceiling of the gas dome being higher than the level of the discharge from the space above the intermediate ceiling (8).

14. An apparatus according to claim 13, characterized in that the gas discharge line (27) leading off the siphon bell jar is in contact with the gas dome (9) via a three-way valve (28) which is connected to the pressure side of a pressure-raising blower (29) which is connected on the suction side with the gas dome (9), the space below the shut-off covering (3) of the reactor and a gas discharge line (31) that leads off the reactor, with a locking element, for instance a locking flap (32), inserted in the gas discharge line (30) leading to the gas dome (9).

15. An apparatus according to any one of the claims 6 to 14, characterized in that a gas discharge line (23) discharges into the distribution cylinder (11) provided in the space above the intermediate ceiling (8) and terminates in the space underneath the intermediate ceiling (8) at a level that is lower than the upper edge of the inner cylinder (7), the discharge terminal, if necessary, being formed by a pipe widening (24) of the gas discharge line (23).

16. An apparatus according to claim 15, characterized in that the discharge cross-section of gas discharge line (23) located above the intermediate ceiling (8) lies inside a pipe (25) open on both sides.

17. An apparatus according to claim 6 or 7, characterized in that the connecting line (21) connecting the space underneath the intermediate ceiling (8) to the space above intermediate ceiling (8) is provided between its ends and in the space above the intermediate ceiling (8), but underneath the level of the discharge (overflow channel 35), with a controllable opening (22), a floating body by means of which the opening (22) is closed at changing fluid level preferably being provided for said control.

18. An apparatus according to any one of the claims 6 or 7 or 8 to 17, characterized in that an outlet (33) variable in height and connected to the discharge line (39) via a line preferably provided with a locking element (locking flap 34) is provided above the intermediate ceiling (8) and below the level of the drain (overflow channel 35).

19. An apparatus according to any one of the claims 6 to 18, characterized in that the discharge line (39) is connected under interposition of a siphon bell jar (37) optionally located outside of the reactor to the drain (overflow channel 35) and that the discharge line (39), if necessary, is provided with at least one aeration pipe socket (38).

20. An apparatus according to any one of the claims 6 to 17, characterized in that the discharge terminal located underneath the intermediate ceiling (8) of the connecting line (21) connecting the space underneath to the space above the intermediate ceiling (8) is provided with gas traps (20).

21. An apparatus according to any one of the claims 6 to 20, characterized in that at least one permeable intermediate bottom (16) on which a bed of filler bodies (17) can be stored and which bridges the space between the outer wall (1) of the vessel and the inner cylinder (7) is provided underneath the intermediate ceiling (8).

22. An apparatus according to any one of the claims 6 or 7 or 8 to 23, characterized in that a filter (65) is provided upstream (in flowing direction) of the drain preferably formed as an overflow channel (35).

23. An apparatus according to claim 22, characterized in that the filter (65) forms the bottom of a storage space (56) positioned in the space above the intermediate ceiling (8), with the side walls (61, 1) of the storage space (56) projecting above the overflow level of the drain (overflow channel 35) arranged in the storage space (56) so that the substrate to be filtered on its way to the drain flows against the filter (65) from below.

24. An apparatus according to claim 23, characterized in that the side walls (61) above the overflow level of the drain are provided with passages and/or that the side walls (61) terminate at a distance from the shut-off covering (3) of the reactor.

25. An apparatus according to claim 23, characterized in that a charging space (55) separated from the space (49) above the intermediate ceiling (8) by limiting walls (67), but connected to the space above the intermediate ceiling (8) via back-flow orifices provided with nonreturn valves (54), is arranged underneath the filter (65) and that supply lines (63) leading off an overflow (62) whose overflow level is approximately at the same height as the overflow level of the drain in the chamber limited on the bottom by the filter (65) discharge in the space underneath the filter (65).

FIGUR 1

FIGUR 2

FIGUR 3

FIGUR 4

FIGUR 5